(19) 

Europäisches
Patentamt
European
Patent Office
Office européen
des brevets

(11)     **EP 2 869 451 B1**

(12)                    **EUROPEAN PATENT SPECIFICATION**

(45) Date of publication and mention
of the grant of the patent:
**13.09.2017 Bulletin 2017/37**

(51) Int Cl.:
*H02M 7/12* (2006.01)          *F24F 11/02* (2006.01)
*H02M 1/42* (2007.01)

(21) Application number: **13833735.7**

(22) Date of filing: **31.05.2013**

(86) International application number:
**PCT/JP2013/065203**

(87) International publication number:
**WO 2014/034207 (06.03.2014 Gazette 2014/10)**

(54) **DEVICE, METHOD, AND PROGRAM FOR CONTROLLING CONVERTER, AND AIR CONDITIONER**

VORRICHTUNG, VERFAHREN UND PROGRAMM ZUR STEUERUNG EINES UMRICHTERS UND
KLIMAANLAGE

DISPOSITIF, PROCÉDÉ ET PROGRAMME DE COMMANDE DE CONVERTISSEUR AINSI
QU'APPAREIL DE CONDITIONNEMENT D'AIR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.08.2012 JP 2012190134
12.12.2012 JP 2012271650**

(43) Date of publication of application:
**06.05.2015 Bulletin 2015/19**

(73) Proprietor: **Mitsubishi Heavy Industries, Ltd.
Tokyo 108-8215 (JP)**

(72) Inventors:
• **SUMITO, Kiyotaka**
**Tokyo 108-8215 (JP)**
• **KANIE, Tetsuo**
**Tokyo 108-8215 (JP)**
• **SHIMIZU, Kenji**
**Tokyo 108-8215 (JP)**
• **SUMIYA, Atsuyuki**
**Tokyo 108-8215 (JP)**
• **YOSHIDA, Junichi**
**Tokyo 108-8215 (JP)**
• **MIYATA, Masayuki**
**Nagoya-shi**
**Aichi 453-0862 (JP)**

(74) Representative: **Intès, Didier Gérard André et al
Cabinet Beau de Loménie
158 rue de l'Université
75340 Paris Cedex 07 (FR)**

(56) References cited:
WO-A1-2005/006531     JP-A- H07 213 074
JP-A- H08 214 550       JP-A- 2004 312 862
JP-A- 2006 109 583      JP-A- 2008 054 461
JP-A- 2010 110 109      US-A- 6 084 786

• MARSCHALKO R ET AL: "Optimal control and
appropriate pulse width modulation for a
three-phase voltage DC-link PWM converter",
PROCEEDINGS OF THE INDUSTRY
APPLICATIONS SOCIETY ANNUAL MEETING.
HOUSTON, OCT. 4 - 9, 1992; [PROCEEDINGS OF
THE INDUSTRY APPLICATIONS SOCIETY
ANNUAL MEETING], NEW YORK, IEEE, US, vol.
-, 4 October 1992 (1992-10-04), pages 1042-1049,
XP010063644, DOI: 10.1109/IAS.1992.244432
ISBN: 978-0-7803-0635-6
• ZARGARI N R ET AL: "AN ON-LINE OPERATED
UNITY POWER FACTOR PWM RECTIFIER FOR
AC DRIVE APPLICATIONS", CONFERENCE
RECORD OF THE INDUSTRY APPLICATIONS
CONFERENCE. DENVER, OCT. 2 - 5, 1994;
[CONFERENCE RECORD OF THE INDUSTRY
APPLICATIONS CONFERENCE IAS ANNUAL
MEETING], NEW YORK, IEEE, US, vol. 1, 2
October 1994 (1994-10-02), pages 673-678,
XP000514812, ISBN: 978-0-7803-1994-3

- **AKIRA NABAE ET AL: "A New Definition of Instantaneous Active-Reactive Current and Power Based on Instantaneous Space Vectors on Polar Coordinates in Three-Phase Circuits", IEEE TRANSACTIONS ON POWER DELIVERY, IEEE SERVICE CENTER, NEW YORK, NY, US, vol. 11, no. 3, 1 July 1996 (1996-07-01), pages 1238-1243, XP011049194, ISSN: 0885-8977, DOI: 10.1109/61.517477**

## Description

Technical Field

The present invention relates to a converter control device, method, and program, and an air conditioner.

{Background Art}

As a converter device which converts three-phase alternating current (AC) voltage output from a three-phase AC power supply into direct current (DC) voltage, a PWM rectifier disclosed in PTL 1 has conventionally been known. Furthermore, Zargari et al, "An on-line operated unity power factor PWM rectifier for AC drive applications", Conference record of the industry applications conference, Denver, Oct. 2-5, 1994, vol. 1 pages 673-678, XP 000514812, ISBN 978-0-7803-1664-3, also discloses a PWM rectifier. Besides, Marschalko et al, "Optimal control and appropriate pulse width modulation for a three-phase voltage DC-link PWM converter", in Proceedings of the industry applications society annual meeting, Houston, Oct. 4-9, 1992, pages 1042-1049, XP 010063644, DOI 10.109/IAS.1992.244432, ISBN 978-0-7803-0635-6, discloses a control method for a three-phase voltage DC-link PWM converter.

{Citation List}

{Patent Literature}

{PTL 1} Japanese Unexamined Patent Application, Publication No. Hei 10-164845

{Summary of Invention}

{Technical Problem}

According to the PWM rectifier disclosed in PTL 1, the power factor can be controlled to about 1 in a certain load where a control parameter is set, whereas the power factor cannot be controlled to 1 in other load regions.

An object of the present invention is to provide a converter control device, method, and program, and an air conditioner capable of controlling the power factor to about 1 irrespective of a load.

{Solution to Problem}

A first aspect of the present invention is a converter control device used for a converter, the converter including a bridge circuit for converting three-phase AC voltage output from a three-phase AC power supply into DC voltage and outputting the DC voltage, the bridge circuit having a pair of switch units provided for each phase of the three-phase AC power supply, the pair of switch units including an upper arm switching element and a lower arm switching element, the upper arm switching element and the lower arm switching element having a junction point connected to each corresponding phase, the converter control device including: a reactive current calculation means that calculates a reactive current by using current detection values of any two phases and a voltage phase of any one phase; a correction amount calculation means that calculates a phase difference between the voltage phase of the phase and a voltage phase of the phase for zeroing the reactive current; a phase correction means that corrects the voltage phase of the phase by using the phase difference calculated by the correction amount calculation means; a three-phase voltage command determination means that determines phase voltage commands corresponding to the respective phases based on a predetermined voltage command value and a corrected voltage phase of the phase; and a driving signal generation means that generates driving signals for the switch units corresponding to the respective phases by using the phase voltage commands.

According to the present aspect, a reactive current is calculated based on current detection values of any two phases and a voltage phase of any one phase, a voltage phase difference for zeroing the reactive current zero is calculated, and phase voltage commands of the respective phases are determined by using a voltage phase corrected with the phase difference with which the voltage phase of the phase was calculated. As a result, it becomes possible to zero the phase difference between the power supply voltage and the power supply current. This makes it possible to keep the power factor to 1, without influence of the size of the load.

In the converter control device, the voltage phase of the phase used in the reactive current calculation means may be a value detected by a zero cross detection means, or a previous value of the corrected voltage phase of the phase calculated by the phase correction means, or may be calculated through an arithmetic calculation using a phase formula including power supply frequency and time as a parameter.

The converter control device may also include a zero cross detection means connected to the one phase and to a neutral point of the power supply, the zero cross detection means detecting the voltage phase of the phase. When the three-phase AC power supply does not have a neutral point, a pseudo neutral point formed by connecting the respective phases via resistances may be used in place of the neutral point of the three-phase AC power supply.

In the converter control device, when a specified time delay is set for on-and-off timing of switching the upper arm switching element and the lower arm switching element in an identical phase to prevent the switching elements from being simultaneously turned on, the driving signal generation means may generate PWM signals wherein the off-timing of the lower arm switching element corresponding to the phase is delayed by a specified correction time if current of the phase is positive and the off-timing of the upper arm switching element corresponding to the phase is delayed by the specified correction time if the current of the phase is negative.

By generating such PWM signals, an inconvenience associated with providing the specified time delay can be reduced, and this makes it possible to enhance a higher harmonic suppressing effect.

The converter control device may include an unbalance correction processing means, wherein when the difference between the current values of any two phases out of current values of the respective phases reaches a preset specified threshold value or more, the unbalance correction processing means may determine that the three-phase AC power supply is in a voltage unbalanced state, may correct amplitude values of the phase voltage commands determined by the three-phase voltage command determination means with use of a size relation of the current values of the respective phases, and may output the corrected phase voltage commands to the driving signal generation means.

According to such a configuration, when it is determined that the power supply is in the voltage unbalanced state, the amplitude values of the phase voltage commands determined by the three-phase voltage command determination means are corrected in accordance with the size relation of the phase currents. As a result, step-up voltages of the respective phases can be adjusted in accordance with the current values. Accordingly, even when the voltage unbalance occurs, it becomes possible to set the current values of the respective phases to be a substantially identical value.

In the converter control device, when the three-phase AC power supply is determined to be in the voltage unbalanced state, the unbalance correction processing means may gradually increases an amplitude value of the phase voltage command corresponding to a phase that indicates a maximum current value or may gradually decrease an amplitude value of the phase voltage command corresponding to a phase that indicates a minimum current value until the respective phase currents coincide.

Thus, when it is determined that the three-phase AC power supply is in the unbalance state, the amplitude value of the phase voltage command corresponding to the phase that indicates the maximum current value is gradually increased or the amplitude value of the phase voltage command corresponding to the phase that indicates the minimum current value is gradually decreased until the respective phase currents coincide. This makes it possible to make the current values of the respective phases efficiently and easily coincide. An upper limit and a lower limit of the amplitude value are set in advance, and the amplitude value is limited within the range of these upper and lower limit values.

In the converter control device, the amplitude values of the phase voltage commands may be corrected by the unbalance correction processing means when an average of the respective phase currents is a preset specified value or more.

Thus, the phase voltage commands are corrected in an operating state of a load where the average of the respective phase currents becomes a specified value or more. As a result, it becomes possible to perform stable step-up control.

A second aspect of the present invention is a load driver, including: a converter including a bridge circuit for converting three-phase AC voltage output from a three-phase AC power supply into DC voltage and outputting the DC voltage, the bridge circuit having a pair of switch units provided for each phase of the three-phase AC power supply, the pair of switch units including an upper arm switching element and a lower arm switching element, the upper arm switching element and the lower arm switching element having a junction point connected to each corresponding phase; a converter control means that controls the converter; an inverter that converts the DC voltage output from the converter into three-phase AC voltage and supplies the three-phase AC voltage to a load; and an inverter control means that controls the inverter, wherein the converter control means includes: a reactive current calculation means that calculates a reactive current by using current detection values of any two phases and a voltage phase of any one phase; a correction amount calculation means that calculates a phase difference between the voltage phase of the phase and a voltage phase of the phase for zeroing the reactive current; a phase correction means that corrects the voltage phase of the phase by using the phase difference calculated by the correction amount calculation means; a three-phase voltage command determination means that determines phase voltage commands corresponding to the respective phases based on a predetermined voltage command value and a corrected voltage phase of the phase; and a driving signal generation means that generates driving signals for the switch units corresponding to the respective phases by using the phase voltage commands.

A third aspect of the present invention is an air conditioner including the load driver.

Such an air conditioner may include a step-down means that branches DC power input from the converter to the inverter to step down voltage of the DC power, wherein output power of the step-down means may be supplied to an air conditioning auxiliary machine.

A fourth aspect of the present invention is an air conditioner, including: a converter including a bridge circuit for converting three-phase AC voltage output from a three-phase AC power supply into DC voltage and outputting the DC voltage, the bridge circuit having a pair of switch units provided for each phase of the three-phase AC power supply, the pair of switch units including an upper arm switching element and a lower arm switching element, the upper arm switching element and the lower arm switching element having a junction point connected to each corresponding phase; a converter control device according to any one of the aspects; an inverter that converts the DC voltage output from the converter into three-phase AC voltage and supplies the three-phase AC voltage to a compressor motor; an inverter control means that controls the inverter; an indoor unit connected to a power line of any one phase out of power lines of three phases connected to the three-phase AC power supply; an outdoor unit connected to a power line of one phase, out of the power lines of three phases connected to the three-phase AC power supply, other than the power line of the phase connected to the indoor unit, wherein the converter control means includes a power failure notification means that performs error notification notifying power failure when the corrected phase voltage commands output from the unbalance correction processing means include a phase voltage command whose peak value is equal to or less than a preset specified error notification threshold value, the power failure being notified to the indoor unit or the outdoor unit connected to a corresponding phase.

According to the aforementioned aspect, the error attributed to the voltage unbalanced state can be notified to the indoor unit and the outdoor unit which receive electric power from the three-phase AC power supply. Accordingly, the indoor unit and outdoor unit side can ascertain the cause of an abnormality which is currently occurring.

In the air conditioner, when the corrected phase voltage commands output from the unbalance correction processing means include a phase voltage command whose peak value is equal to or less than a protection level threshold value set smaller than the error notification threshold value, the power failure notification means may output a signal instructing shutdown to the indoor unit or the outdoor unit connected to a corresponding phase.

Thus, outputting a shutdown signal enables the indoor unit and the outdoor unit to be protected.

A fifth aspect of the present invention is a method for converter control used for a converter, the converter including a bridge circuit for converting three-phase AC voltage output from a three-phase AC power supply into DC voltage and outputting the DC voltage, the bridge circuit having a pair of switch units provided for each phase of the three-phase AC power supply, the pair of switch units including an upper arm switching element and a lower arm switching element, the upper arm switching element and the lower arm switching element having a junction point connected to each corresponding phase, the method for converter control including: a reactive current calculating step of calculating a reactive current by using current detection values of any two phases and a voltage phase of any one phase; a correction amount calculation step of calculating a phase difference between the voltage phase of the phase and a voltage phase of the phase for zeroing the reactive current; a phase correction step of correcting the voltage phase of the phase by using the phase difference; a three-phase voltage command determination step of determining phase voltage commands corresponding to the respective phases based on a predetermined voltage command value and a corrected voltage phase of the phase; and a driving signal generation step of generating driving signals for the switch units corresponding to the respective phases by using the phase voltage commands.

A sixth aspect of the present invention is a converter control program used for a converter, the converter including a bridge circuit for converting three-phase AC voltage output from a three-phase AC power supply into DC voltage and outputting the DC voltage, the bridge circuit having a pair of switch units provided for each phase of the three-phase AC power supply, the pair of switch units including an upper arm switching element and a lower arm switching element, the upper arm switching element and the lower arm switching element having a junction point connected to each corresponding phase, the converter control program causing a converter control device according to claim 1 to execute: a reactive current calculation process of calculating a reactive current by using current detection values of any two phases and a voltage phase of any one phase; a correction amount calculation process of calculating a phase difference between the voltage phase of the phase and a voltage phase of the phase for zeroing the reactive current; a phase correction process of correcting the voltage phase of the phase by using the phase difference; a three-phase voltage command determination process of determining phase voltage commands corresponding to the respective phases based on a predetermined voltage command value and a corrected voltage phase of the phase; and a driving signal generation process of generating driving signals for the switch units corresponding to the respective phases by using the phase voltage commands.

{Advantageous Effects of Invention}

According to the present invention, an effect of being able to control the power factor to about 1 irrespective of a load is implemented.

{Brief Description of Drawings}

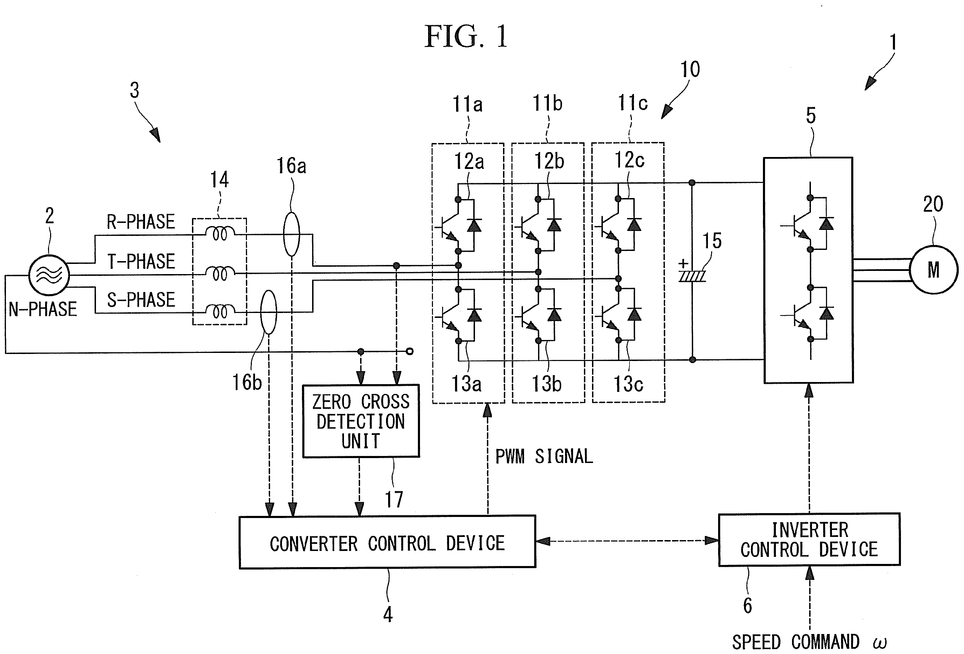

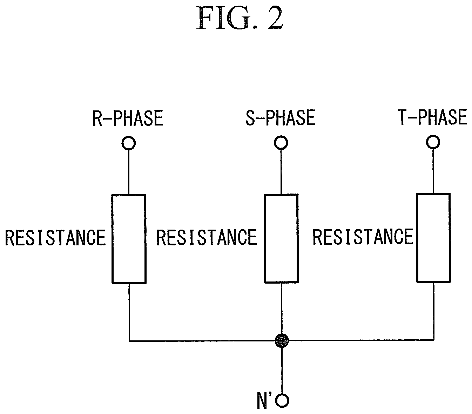

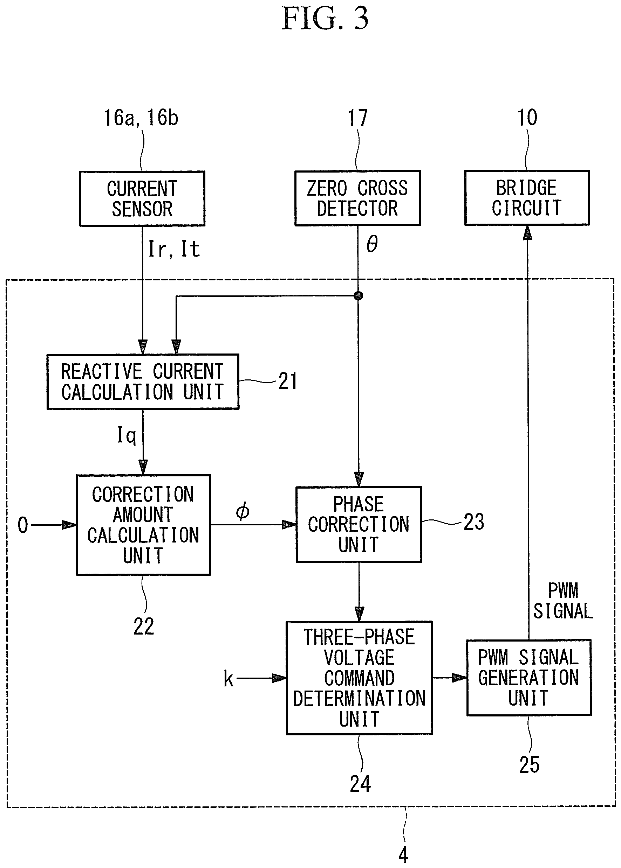

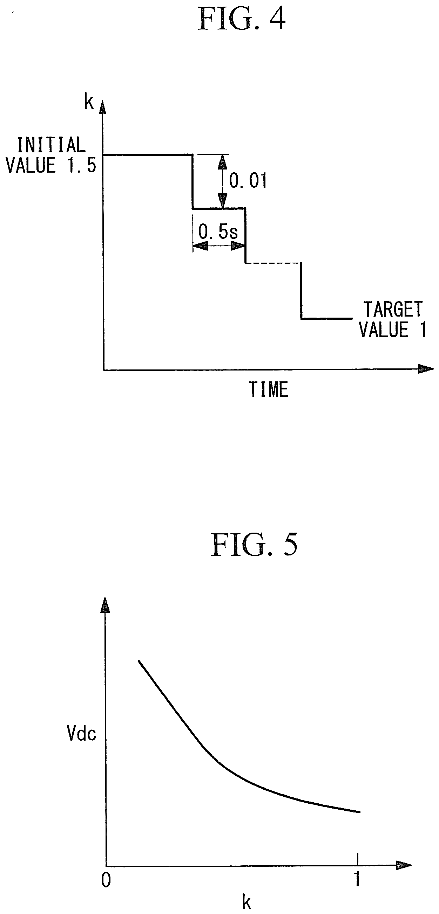

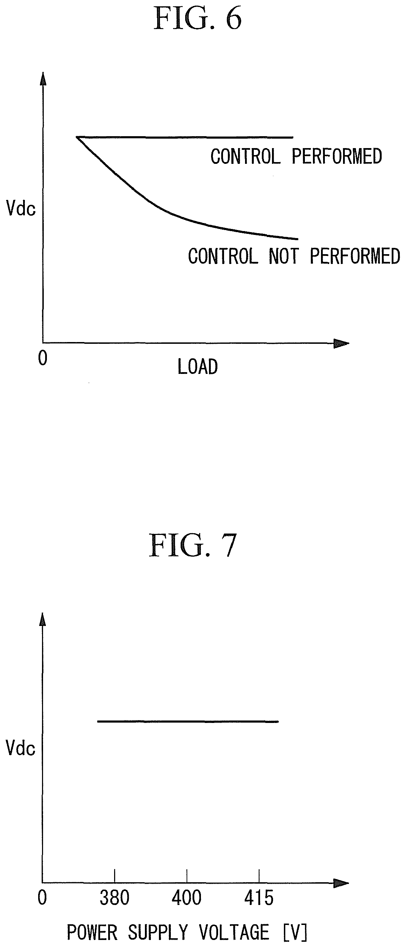

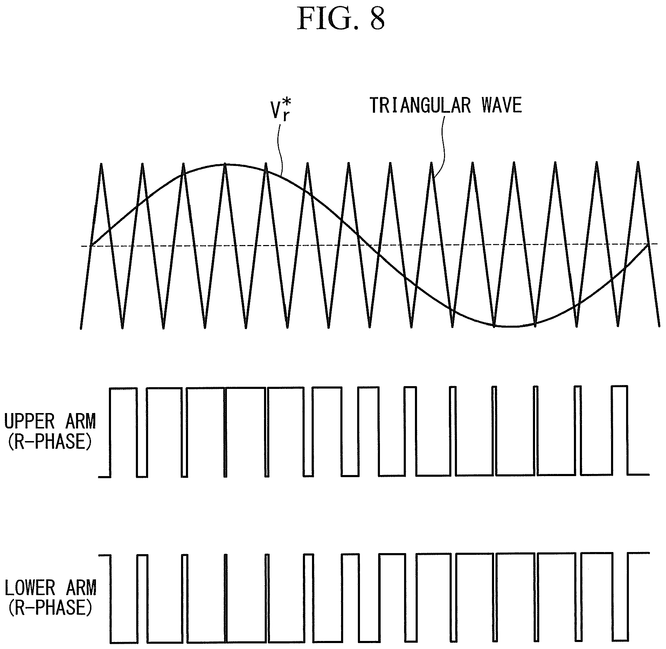

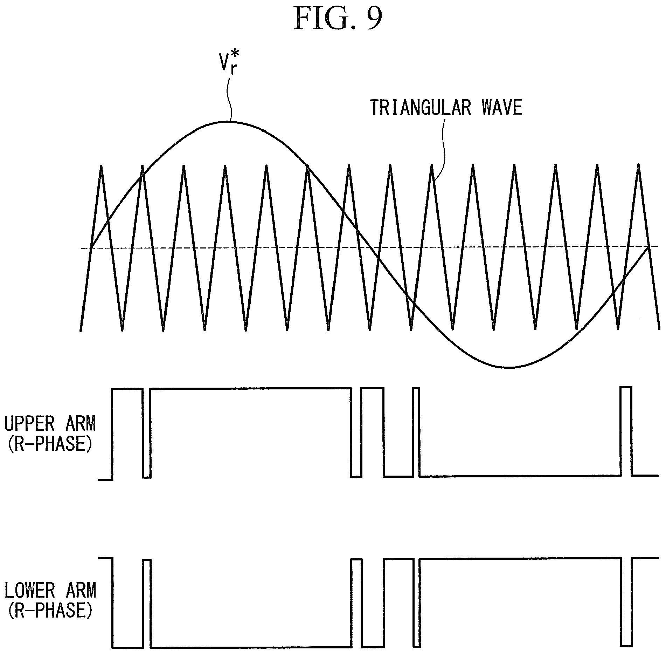

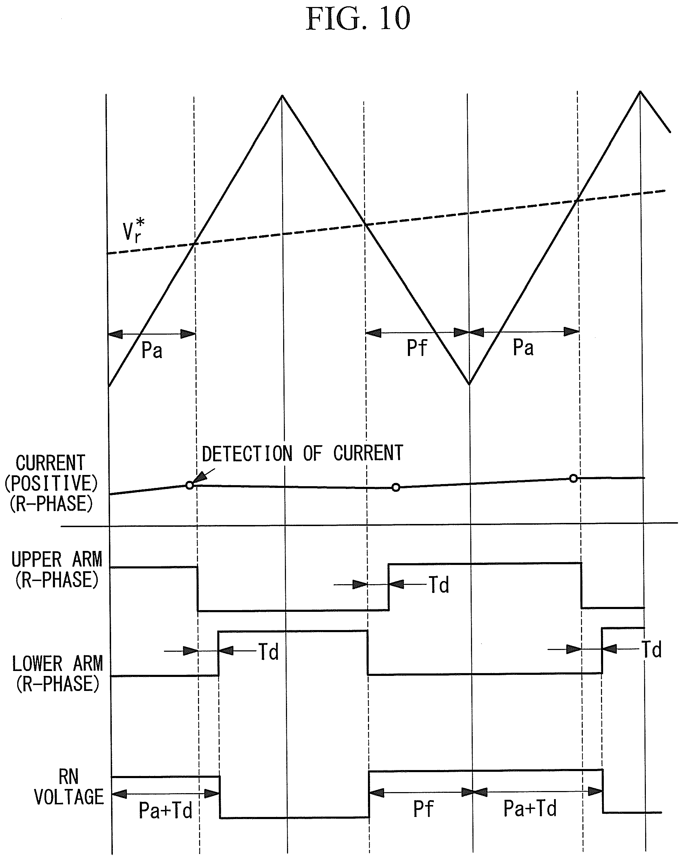

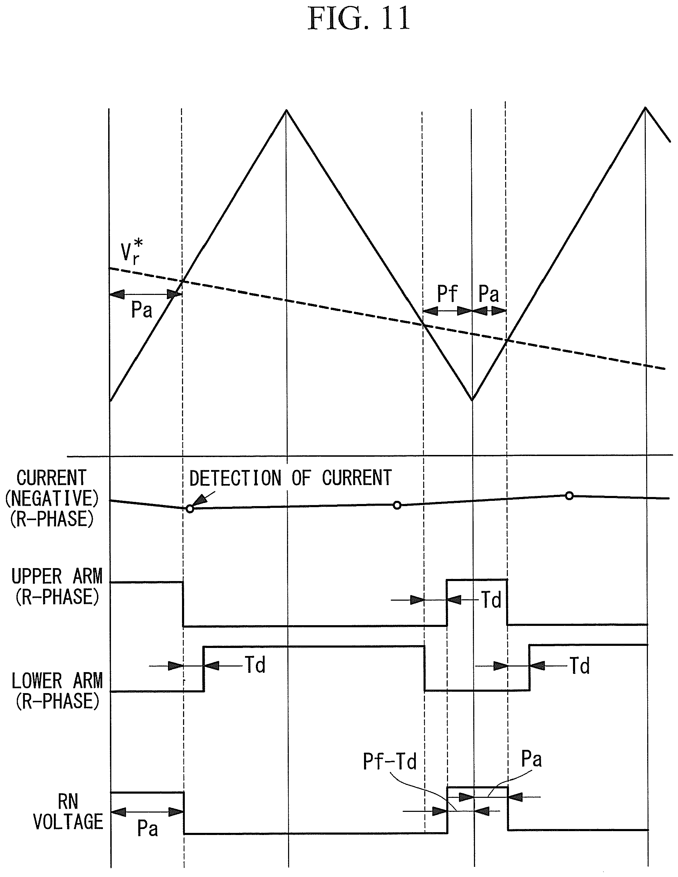

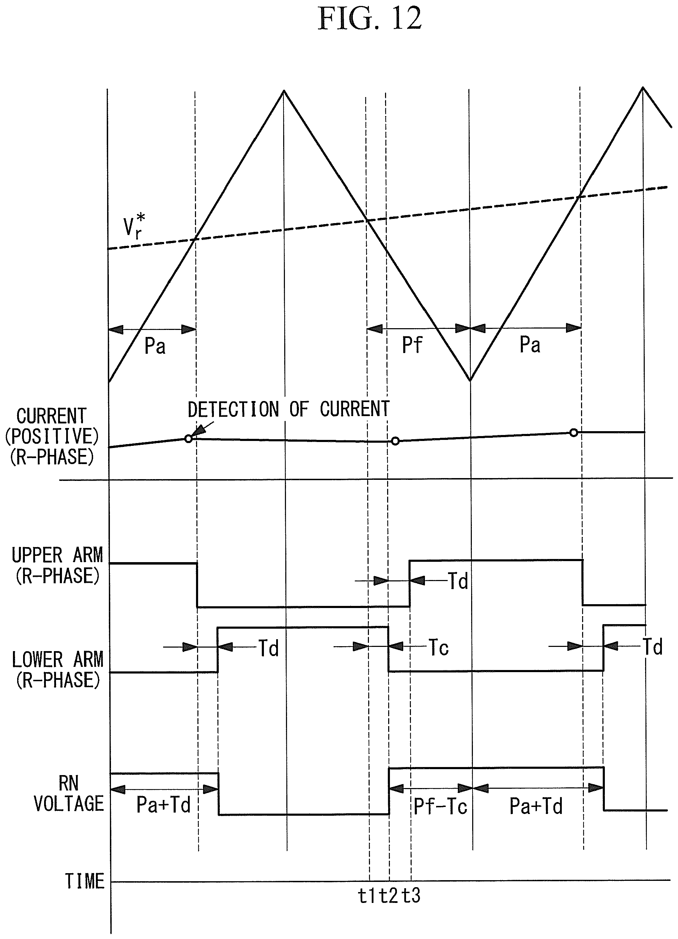

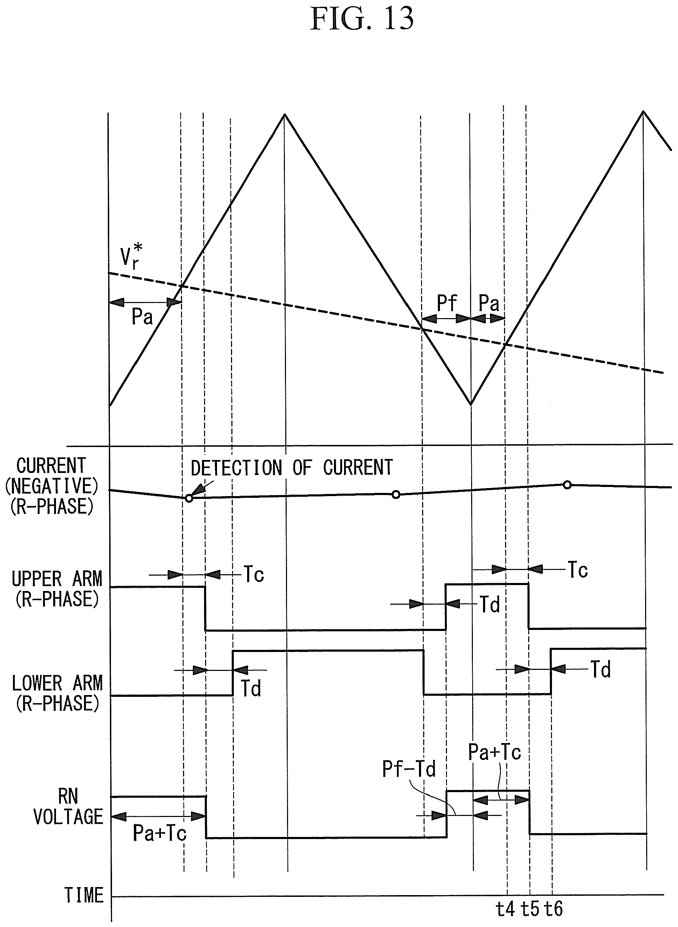

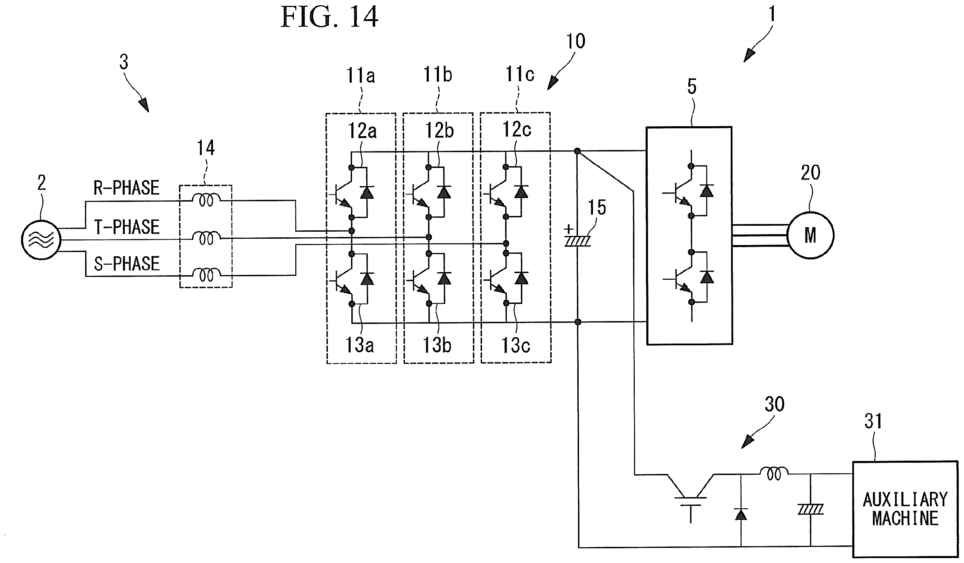

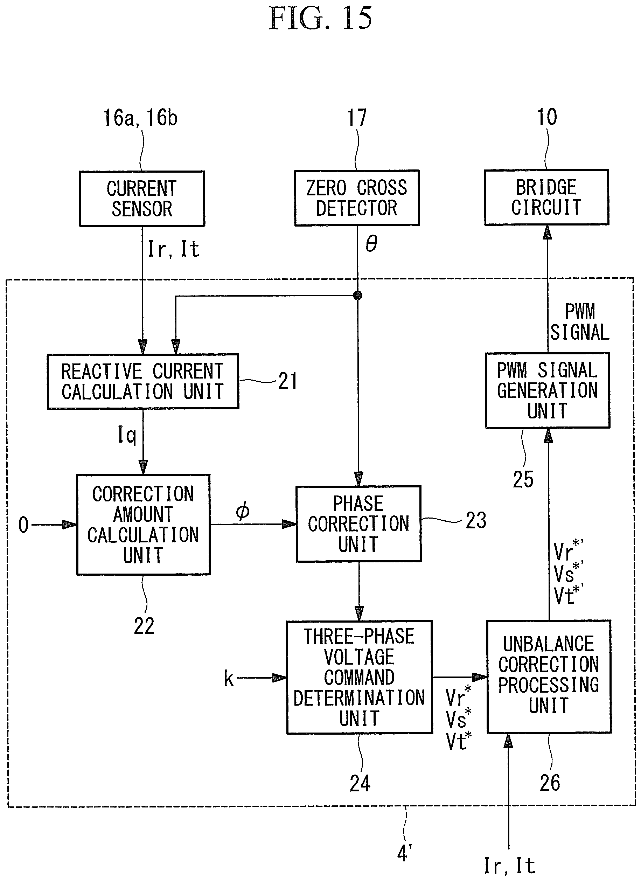

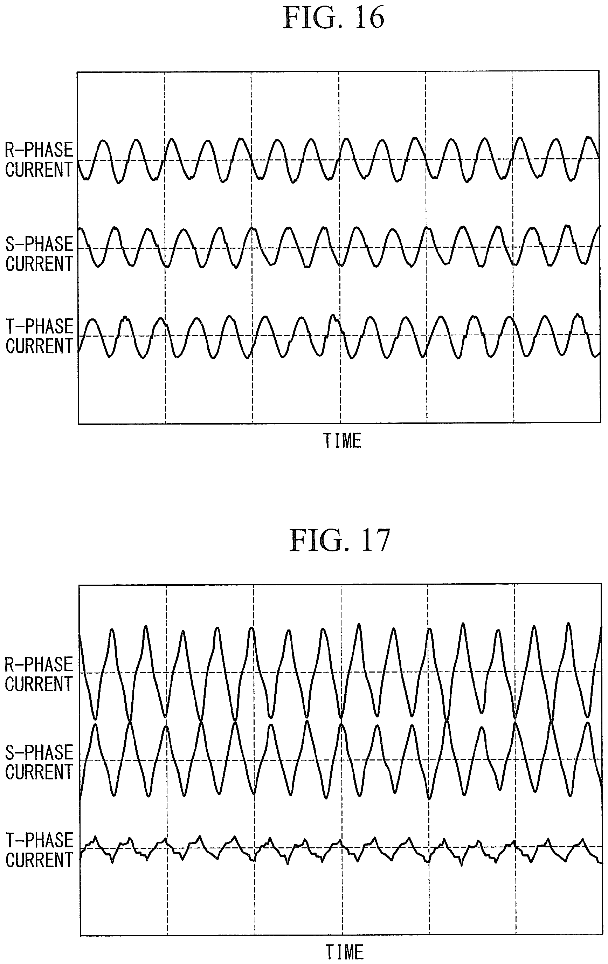

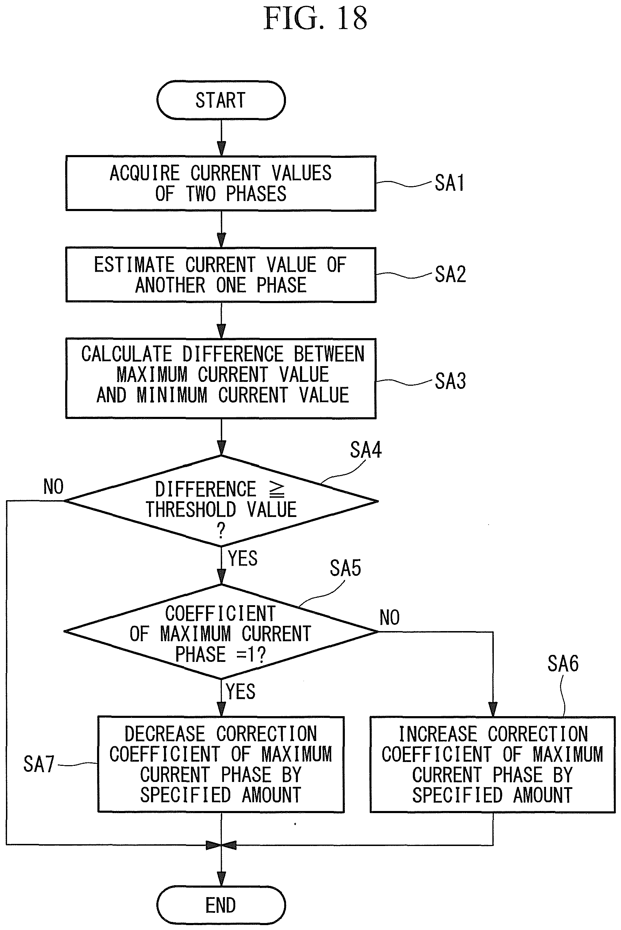

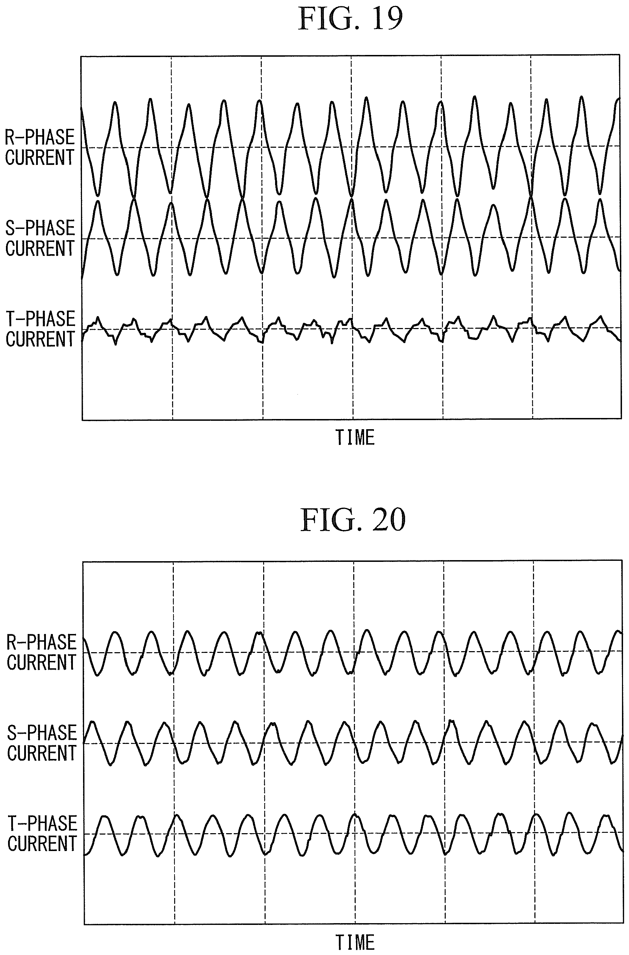

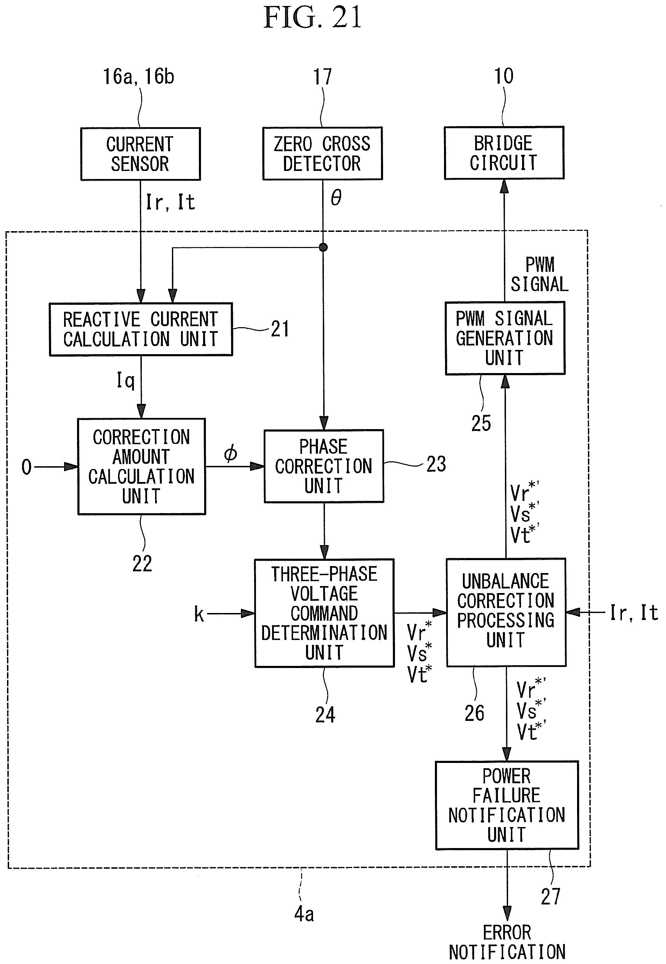

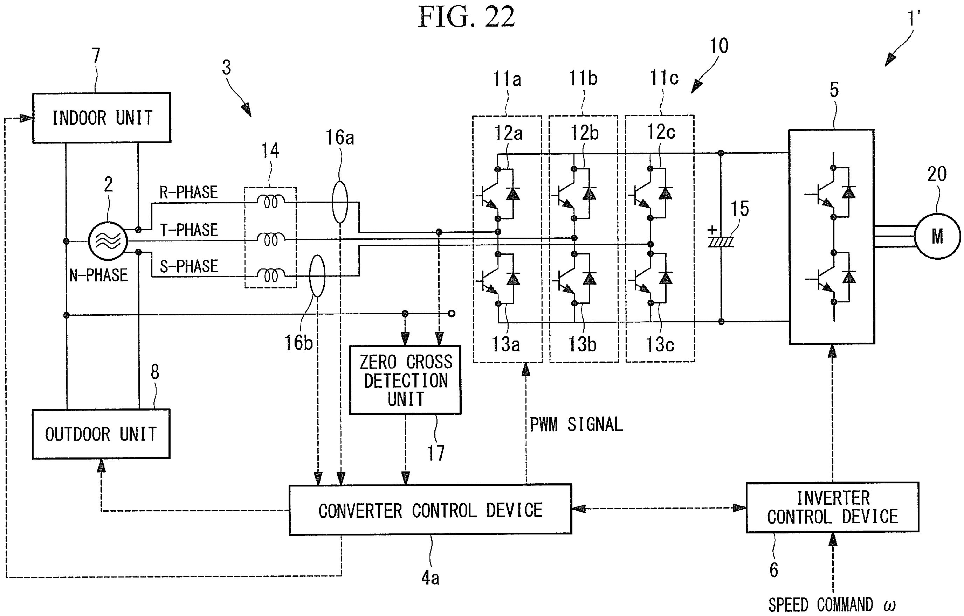

{Fig. 1} Fig. 1 is a schematic view illustrating the configuration of a drive control device for a compressor motor in an air conditioner according to a first embodiment of the present invention.
{Fig. 2} Fig. 2 is an explanatory view of a pseudo neutral point.
{Fig. 3} Fig. 3 is a functional block diagram of a converter control device according to the first embodiment of the present invention.
{Fig. 4} Fig. 4 illustrates a setting example of a voltage command value at the time of startup.
{Fig. 5} Fig. 5 illustrates an example of a table indicating relation between a voltage command value and a converter voltage.
{Fig. 6} Fig. 6 illustrates relation between a load and a converter voltage when the voltage command value is set by using the table illustrated in Fig. 5.
{Fig. 7} Fig. 7 illustrates relation between a power supply voltage and a converter voltage when the voltage command value is set by using the table illustrated in Fig. 5.
{Fig. 8} Fig. 8 illustrates an example of PWM signals of an upper arm switching element and a lower arm switching element in R-phase when the voltage command value is 1.
{Fig. 9} Fig. 9 illustrates an example of PWM signals of the upper arm switching element and the lower arm switching element in the R-phase when the voltage command value is 1.5.
{Fig. 10} Fig. 10 illustrates an example of a method for generating the PWM signal.
{Fig. 11} Fig. 11 illustrates an example of the method for generating the PWM signal.
{Fig. 12} Fig. 12 illustrates another example of the method for generating the PWM signal.
{Fig. 13} Fig. 13 illustrates another example of the method for generating the PWM signal.
{Fig. 14} Fig. 14 illustrates one configuration example in the case of supplying converter voltage to an auxiliary machine.
{Fig. 15} Fig. 15 is a functional block diagram of a converter control device according to a second embodiment of the present invention.
{Fig. 16} Fig. 16 illustrates an example of current waveforms of respective phases in a balanced voltage state.
{Fig. 17} Fig. 17 illustrates an example of the current waveforms of the respective phases in a voltage unbalanced state.
{Fig. 18} Fig. 18 is a flow chart illustrating procedures of processing executed by an unbalance correction processing unit illustrated in Fig. 15.
{Fig. 19} Fig. 19 illustrates an example of current waveforms of respective phases in the voltage unbalanced state.
{Fig. 20} Fig. 20 illustrates current waveforms of the respective phases after performing unbalance correction processing in the voltage unbalanced state illustrated in Fig. 19.
{Fig. 21} Fig. 21 is a functional block diagram of a converter control device according to a third embodiment of the present invention.
{Fig. 22} Fig. 22 illustrates one aspect of an air conditioner including the converter control device illustrated in Fig. 20.

{Description of Embodiments}

Hereinbelow, embodiments of the converter control device, method and program according to the present invention in the case of being applied to an air conditioner will be described with reference to the drawings.

{First Embodiment}

Fig. 1 is a schematic view illustrating the configuration of a motor driver (load driver) 1 for a compressor motor 20 in an air conditioner according to a first embodiment of the present invention. As illustrated in Fig. 1, the motor driver 1 includes a converter 3 that converts alternate current (AC) power from a three-phase AC power supply 2 into direct current (DC) power, a converter control device 4 that controls the converter 3, an inverter 5 that converts the DC power output from the converter 3 into three-phase AC power and outputs the three-phase AC power to the compressor motor 20, and an inverter control device 6 that controls the inverter 5.
The converter 3 includes a bridge circuit 10 having switch units 11a, 11b, and 11c provided for each of R-phase, S-phase, and T-phase of the three-phase AC power supply 2. The switch units 11a, 11b, and 11c include upper arm switching elements 12a, 12b and 12c and lower arm switching elements 13a, 13b and 13c, respectively. In the respective switch unit 11a, 11b and 11c, the upper arm switching elements 12a, 12b and 12c, and the lower arm switching elements 13a, 13b and 13c have junction points each connected to corresponding phases via a reactor 14. A smoothing capacitor 15 is connected to between the positive electrode terminals and the negative electrode terminals at the output side of the bridge circuit 10.

The converter 3 has current sensors 16a and 16b provided for detecting currents of two phases, such as R-phase (first phase) and T-phase (second phase), out of the three phases. The converter 3 also has a zero cross detection unit 17 provided for comparing any one phase, such as R-phase, out of the three phases and a neutral point of the three-phase AC power supply 2 to detect a voltage phase θ of the R-phase. When the three-phase AC power supply does not have a neutral point, the zero cross detection unit 17 connects each of the R-phase, the S-phase, and the T-phase via resistances to form a pseudo neutral point N', and compares the pseudo neutral point N' and the R-phase to detect the R-phase voltage phase θ as illustrated in Fig. 2.

Current detection values Ir and It of the R-phase and the T-phase measured by the current sensors 16a and 16b and the R-phase voltage phase θ detected by the zero cross detection unit 17 are output to the converter control device 4.

For example, the converter control device 4 is a micro processing unit (MPU) having a computer-readable recording medium storing a program that implements processing of respective units described below. When the CPU downloads the program stored in the recording medium to a main storage such as a RAM and executes the program, the processing in the respective units as shown below is implemented. Examples of the computer-readable recording medium include magnetic disks, magneto-optical disks, and semiconductor memory devices, and the like.

The converter control device 4 is configured to allow two-way communication with the inverter control device 6.

As in the case of the converter 3, the inverter 5 includes an upper arm switching element and a lower arm switching element provided for each of the phases. When these switching elements are driven based on PWM signals generated by the inverter control device 6, the three-phase AC voltage to be supplied to the compressor motor 20 is generated.

The inverter control device 6 generates the PWM signals of the respective phases which make the speed of the compressor motor 20 coincide with a speed command ω given from a higher order control device (illustration omitted), and gives the PWM signals to the inverter 5.

Now, the converter control device 4 is described with reference to Fig. 3.

Fig. 3 is a functional block diagram of the converter control device 4. As illustrated in Fig. 3, the converter control device 4 includes a reactive current calculation unit 21, a correction amount calculation unit 22, a phase correction unit 23, a three-phase voltage command determination unit 24, and a PWM generation unit (driving signal generation means) 25 as main components.

The reactive current calculation unit 21 receives input of the R-phase and T-phase current detection values Ir and It measured by the current sensors 16a and 16b, and the R-phase voltage phase θ detected by the zero cross detection unit 17.

The reactive current calculation unit 21 calculates a reactive current Iq by these input information pieces and an expression (1) shown below:

$$Iq = \sqrt{2}(Ir\cos(\theta + \pi/6) - It\sin(\theta)) \qquad (1)$$

In the expression (1), Ir represents an R-phase current detection value, It represents a T-phase current detection value, and θ represents an R-phase voltage phase detected by the zero cross detection unit 17. The reactive current Iq calculated by the reactive current calculation unit 21 is output to the correction amount calculation unit 22.

The correction amount calculation unit 22 calculates a voltage phase difference of the R-phase which zeros the reactive current Iq, as a phase correction amount Φ. Specifically, the correction amount calculation unit 22 performs integral control to calculate the phase correction amount Φ which zeros the reactive current Iq. For example, the phase correction amount Φ is calculated by the following expression (2):

$$\phi = \int(0 - Iq)dt \qquad (2)$$

The phase correction amount Φ may be calculated by proportional plus integral control instead of the integral control.

The phase correction unit 23 corrects the R-phase voltage phase θ detected by the zero cross detection unit 17 with use of the phase correction amount Φ calculated by the correction amount calculation unit 22 to obtain a corrected phase θ'. Specifically, the phase correction unit 23 corrects the voltage phase θ by subtracting the phase correction amount Φ from the R-phase voltage phase θ input from the zero cross detection unit 17 as expressed by the expressions (3) shown below:

$$\theta' = \theta - \Phi \qquad (3)$$

The three-phase voltage command determination unit 24 determines phase voltage commands corresponding to the respective phases by using a predetermined voltage command value k and the corrected voltage phase $\theta'$ input from the phase correction unit 23. Specifically, respective phase voltage commands $V_r^*$, $V_s^*$, and $V_t^*$ of the R-phase, the S-phase, and the T-phase are determined respectively based on the following expressions (4) to (6):

$$V_r^* = k\sin(\theta') \qquad (4)$$

$$V_s^* = k\sin(\theta' - 2\pi/3) \qquad (5)$$

$$V_t^* = k\sin(\theta' - 4\pi/3) \qquad (6)$$

Here, as illustrated in Fig. 4 for example, the voltage command value k is set to k= 1.5 at the time of startup of the converter 3. The voltage command value k is changed so as to be decreased to k= 1.0 in stages over time.

After the converter 3 is started, a value obtained by, for example, performing the proportional plus integral control on a difference ΔVdc between a target voltage Vdc* that is a preset specified converter voltage (both end voltages of the smoothing capacitor 15) and a measured converter voltage Vdc may be used as the voltage command value k.

Instead of this, a table in which the voltage command value k and the converter voltage Vdc are associated with each other may be prepared in advance, and the voltage command value k corresponding to the converter voltage Vdc may be set by using this table as illustrated in Fig. 5.

For example, the converter voltage Vdc has a tendency to decrease as the load (for example, the speed of a motor, and the like) is higher as illustrated with a curved line "control not performed" in Fig. 6. Therefore, in consideration of such a tendency, the relation between the voltage command value k and the converter voltage Vdc, which can maintain the converter voltage Vdc at a constant value even with changes in load, may be prepared in advance as a table, and the voltage command value k may be set with use of this table.

This makes it possible to maintain the converter voltage Vdc constant even when the load changes as illustrated with a line "control performed" in Fig. 6 for example. As illustrated in Fig. 7, even when the power supply voltage changes to 380V, 400V, and 415V, it becomes possible to control the converter voltage Vdc to be constant and to thereby commonalize the power supply voltage.

The PWM signal generating unit 25 compares the phase voltage commands $V_r^*$, $V_s^*$, and $V_t^*$ of the respective phases determined by the three-phase voltage command determination unit 24 with a triangular wave having a specified carrier frequency so as to generate PWM signals which are switching driving signals of the switch units 11a, 11b, and 11c corresponding to the respective phases. The PWM signal generating unit 25 provides the PWM signals to the bridge circuit 10 in the converter 3.

Fig. 8 illustrates an example of PWM signals of the upper arm switching element and the lower arm switching element in the R-phase when the voltage command value k is 1. Fig. 9 illustrates an example of PWM signals of the upper arm switching element and the lower arm switching element in the R-phase when the voltage command value k is 1.5. PWM signals of the S-phase and the T-phase are also generated in a similar way.

Here, when the PWM signals are generated, a specified time delay Td is provided to on-timing of the upper arm switching element and the lower arm switching element as illustrated in Figs. 10 and 11. Fig. 10 illustrates an example of the PWM signals when an R-phase phase current is positive. Fig. 11 illustrates an example of the PWM signals when the R-phase phase current is negative.

In Figs. 10 and 11, the upper arm switching element and the lower arm switching element are controlled so that one switching element falls and then after a lapse of the time delay Td after the fall, the other switching element rises. The time delay Td is a value which can arbitrarily be set in accordance with the characteristics of the switching elements (for example, power transistors and the like).

Since the specified time delay Td is given in this way to prevent the upper arm switching element and the lower arm switching element from being simultaneously turned on, short circuit can be prevented.

According to the method for PWM signal generation illustrated in Figs. 10 and 11, a period of time when RN voltage is applied does not coincide with time Pf+Pa determined by the comparison between the phase voltage command $V_r^*$ and the triangular wave. For example, when the R-phase current illustrated in Fig. 10 is positive, RN voltage application time is Pf+Pa+Td, and therefore the RN voltage is controlled to be larger. When the R-phase current illustrated in Fig.

11 is negative, the RN voltage application time is Pf+Pa-Td, and therefore the RN voltage is controlled to be smaller.

Accordingly, such an error may be corrected by, for example, correcting the falling timing of the lower arm and the rising timing of the upper arm as illustrated in Figs. 12 and 13.

For example, as illustrated in Fig. 12, when the R-phase current is positive, a pulse of the lower arm is made to fall not at time t1 when the phase voltage command $V_r^*$ and the triangular wave intersect, but at time t2 after a lapse of correction time Tc from the time t1. A pulse of the upper arm is made to rise at time t3 after a lapse of the time delay Td from the time t2 when the pulse of the lower arm falls.

Since the pulse falling timing of the lower arm is delayed by the correction time Tc in this way, the RN voltage application time (= Pf+Pa+Td-Tc) can be approximated to the time (= Pf+Pa) obtained by the comparison between the phase voltage command $V_r^*$ and the triangular wave as illustrated in Fig. 12. Furthermore, setting Tc=Td can make the time obtained by the comparison between the phase voltage command $V_r^*$ and the triangular wave coincide with the RN voltage application time.

Similarly, when the R-phase current is negative, the pulse of the upper arm is made to fall not at time t4 when the phase voltage command $V_r^*$ and the triangular wave intersect, but at time t5 after a lapse of a specified correction time Tc from the time t4 as illustrated in Fig. 13.

The pulse of the lower arm is made to rise at time t6 after a lapse of the time delay Td from the time t5 when the pulse of the upper arm falls. Since the pulse falling timing of the upper arm is delayed by the correction time Tc in this way, the RN voltage application time (= Pf+Pa-Td+Tc) can be approximated to the time (= Pf+Pa) obtained by the comparison between the phase voltage command $V_r^*$ and the triangular wave as illustrated in Fig. 13. Setting Tc=Td can make the time obtained by the comparison between the phase voltage command $V_r^*$ and the triangular wave coincide with the RN voltage application time.

As described in the foregoing, when the phase current is positive, the pulse falling timing of the lower arm is corrected to be delayed by the specified correction time Tc. When the phase current is negative, the pulse falling timing of the upper arm is corrected to be delayed by the specified correction time Tc. As a result, it becomes possible to enhance the higher harmonic suppressing effect.

The PWM signals generated by the PWM signal generation unit 25 are each given to the switch units 11a, 11b, and 11c corresponding to the respective phases, so that turning on and off of the respective switching elements are controlled.

A description is now given of a function of the motor driver 1 according to the present embodiment.

First, at the time of startup of the motor driver 1, a start signal is input from an upper device to the inverter control device 6. Upon reception of the start signal, the inverter control device 6 outputs a start signal to the converter control device 4. Upon reception of the start signal, the converter control device 4 sets the value k in accordance with the table illustrated in Fig. 4 and also generates PWM signals corresponding to the respective phases based on the following procedures.

While R-phase and T-phase currents are detected by the current sensors 16a and 16b, the R-phase voltage phase θ is detected by the zero cross detection unit 17. These detection values are output to the converter control device 4.

The current detection values Ir and It and the R-phase voltage phase θ are input to the reactive current calculation unit 21. By using these information pieces and the above-stated expressions (1), the reactive current Iq is calculated. In the correction amount calculation unit 22, the correction amount Φ of the R-phase voltage phase for zeroing the reactive current Iq is calculated, and this phase correction amount Φ is output to the phase correction unit 23. In the phase correction unit 23, the R-phase voltage phase θ detected by the zero cross detection unit 17 is corrected with the phase correction amount Φ from the correction amount calculation unit 22, and a corrected R-phase voltage phase θ' (= θ-Φ) is output to the three-phase voltage command determination unit 24.

In the three-phase voltage command determination unit 24, the phase voltage commands $V_r^*$, $V_s^*$, and $V_t^*$ corresponding to the respective phases are determined by using the voltage command value k set based on the table illustrated in Fig. 4 and the R-phase voltage phase θ' from the phase correction unit 23. Based on the phase voltage commands $V_r^*$, $V_s^*$, and $V_t^*$, PWM signals for the respective phases are produced by the PWM signal generation unit 25.

The PWM signals of the respective phases are given to the bridge circuit 10. Based on the PWM signals, on-off control of the upper arm switching elements 12a, 12b and 12c, and the lower arm switching elements 13a, 13b and 13c of the respective switch units 11a, 11b and 11c is performed.

Accordingly, a voltage between the terminals of the smoothing capacitor 15 gradually rises and once the voltage reaches a specified value, a start end signal is output from the converter control device 4 to the inverter control device 6. The inverter control device 6 receives the signal, and starts control on the inverter 5. As a consequence, the DC power output from the converter 3 is converted into three-phase AC power and is supplied to the compressor motor 20, by which operation of the compressor motor 20 is started.

After the converter 3 is started, the converter control device 4 repeatedly performs a series of the above-stated processing including setting the voltage command value k, calculating the phase correction amount Φ, and correcting the voltage phase θ in accordance with a specified algorithm. Accordingly, the PWM signals are generated in a specified period, and the bridge circuit 10 is controlled so that the converter voltage becomes constant.

As described in the foregoing, according to the converter control device, method, and program, and the air conditioner according to the present embodiment, the reactive current Iq is calculated based on the R-phase and T-phase current detection values Ir and It and the information on the R-phase voltage phase θ, the R-phase voltage phase difference that zeros the reactive current Iq is calculated as a phase correction amount Φ, and the phase voltage commands of the respective phases are determined by using the voltage phase θ' obtained by correcting the R-phase voltage phase θ with the phase correction amount Φ. As a result, a phase difference between the power supply voltage and the power supply current can be zeroed. This makes it possible to keep the power factor to 1, without influence of the size of the load.

In the present embodiment, the reactive current is detected in the reactive current calculation unit 21 by using the voltage phase θ from the zero cross detection unit 17. Instead of this, the reactive current may be calculated through an arithmetic calculation of the voltage phase θ by using the following expression (7).

$$\theta = 2\pi fT \qquad (7)$$

In the above expression (7), f is power supply frequency and T is time. As the power supply frequency, a value may be registered in advance, or the power supply frequency may sequentially be detected, and the detected value may be substituted.

For example, the above-stated method may be replaced by a method in which a previous value of the corrected phase θ' determined by the phase correction unit 23 is used as the voltage phase θ.

Although the case of correcting the R-phase voltage phase has been described in the present embodiment, the S-phase or T-phase voltage phase may be corrected instead of the R-phase voltage phase. Although the R-phase and T-phase currents are detected by the current sensors 16a and 16b, the currents of any two phases may be detected, and a combination thereof may arbitrarily be set. The phase of the voltage phase θ detected by the zero cross detection unit 17 is not limited to the R-phase, but may be the S-phase and the T-phase.

In the present embodiment, the respective phase voltage commands $V_r^*$, $V_s^*$, and $V_t^*$ of the R-phase, S-phase, and T-phase are determined by using the above expressions (4) to (6). In the case where, for example, the phases of the respective phases are detected instead, the respective phase voltage commands $V_r^*$, $V_s^*$, and $V_t^*$ of the R-phase, S-phase, and the T-phase may be determined by using the detected phases of the respective phases according to the following expressions (8) to (10).

$$V_r^* = k\sin(\theta r - \Phi) \quad (8)$$

$$V_s^* = k\sin(\theta s - \Phi) \quad (9)$$

$$V_t^* = k\sin(\theta t - \Phi) \quad (10)$$

In these expressions, θr is a detected phase of the R-phase, θs is a detected phase of the S-phase, and θt is a detected phase of the T-phase. Also, Φ is a phase correction amount.

As illustrated in Fig. 14, a step-down circuit 30 which is connected to an auxiliary machine may be connected to both ends of the smoothing capacitor 15 of the converter 3, so that the DC power generated by the converter 3 is stepped down to a specified voltage value by the step-down circuit 30, and the stepped-down DC power may be supplied to the auxiliary machine 31.

For example, when the power supply voltage is 400V, a 400V-class motor is generally used as the compressor motor 20, whereas a 200V-class motor is used as the auxiliary machine 31 such as a fan motor. Accordingly, when the converter voltage generated by the converter 3 is stepped down by the step-down circuit 30 and then is supplied to the auxiliary machine 31, it becomes possible to use the auxiliary machine whose effect of suppressing the higher harmonic of the input current is enhanced as compared with the case where the phase voltage of the power supply is rectified and then is connected to the auxiliary machine 31.

{Second Embodiment}

Now, the converter control device, method, and program according to a second embodiment of the present invention are described with reference to the drawings. Fig. 15 illustrates the functional block diagram of a converter control device 4' according to the present embodiment. As illustrated in Fig. 15, the converter control device 4' according to the present embodiment is different from the converter control device 4 according to the above-disclosed first embodiment in the point of further including an unbalance correction processing unit 26.

Hereinafter, a description of the points in common with the above-disclosed first embodiment is omitted, and a description is mainly given of the difference from the first embodiment.

When the three-phase AC power supply 2 is put in a voltage unbalanced state in the converter control device 4 according to the above-disclosed first embodiment, a large difference may be generated between the respective phase voltages as compared with the time when voltages are balanced. For example, in the voltage balanced state where an R-S interphase voltage is 415V, a T-S interphase voltage is 415V, and an R-T interphase voltage is 415V, the compressor motor 20 has a speed of 120rps and a torque of 6.7 Nm as a load. In this condition, R-phase, S-phase and T-phase current waveforms are substantially identical as illustrated in Fig. 16.

When this state is changed to a voltage unbalanced state where, for example, the R-S interphase voltage is 435V, the T-S interphase voltage is 415V, and the R-T interphase voltage is 415V, the peak values of R-phase and S-phase current waves become approximately twice as large as those at the voltage balanced time illustrated in Fig. 16, whereas the value of the T-phase current becomes almost close to zero as illustrated in Fig. 17.

As for the T-phase current having a low phase voltage, the switching unit 11c is operated in an attempt to step up the voltage and to charge the smoothing capacitor 15. However, since the step-up voltage is small, it can hardly charge the smoothing capacitor 15. As a result, the T-phase current is considered to become smaller and end up forming the current waveform as illustrated in Fig. 17.

In Fig. 17, the peak values of the R-phase and S-phase current waves are also different from each other. However, this is considered to be attributed to error of the PWM signals and/or variations in characteristics of the switching elements. Ideally, the same-size currents are considered to flow.

The present embodiment is characterized by the unbalance correction processing unit 26 provided for suppressing variations in the current values of the respective phases when such voltage unbalance occurs.

When a difference between the current values of any two phases, out of the current values of the respective phases, reaches a preset specified threshold value (for example, 0.5A) or more, the unbalance correction processing unit 26 determines that the three-phase AC power supply 2 is in the voltage unbalanced state, corrects amplitude values of the phase voltage commands $V_r^*$, $V_s^*$, and $V_t^*$ determined by the three-phase voltage command determination unit 24 with use of the size relation between the current values of the respective phases, and outputs corrected phase voltage commands $V_r^{*'}$, $V_s^{*'}$, and $V_t^{*'}$ to the PWM generation unit 25.

For example, when the supply voltage is determined to be in the voltage unbalanced state, the unbalance correction processing unit 26 gradually increase the amplitude value of the phase voltage command corresponding to the phase that indicates a maximum current value or gradually decreases the amplitude value of the phase voltage command corresponding to the phase that indicates a minimum current value until the respective phase currents Is, Ir and It substantially coincide.

For example, in the unbalance correction processing unit 26, the corrected phase voltage commands $V_r^{*'}$, $V_s^{*'}$, and Vt*' are given by the following expressions (11) to (13):

$$V_r^{*'} = \alpha_r V_r^* \qquad (11)$$

$$V_s^{*'} = \alpha_s V_s^* \qquad (12)$$

$$V_t^{*'} = \alpha_t V_t^* \qquad (13)$$

In the expressions (11), (12) and (13), $\alpha_r$, $\alpha_s$, and $\alpha_t$ are correction coefficients and their initial values are set to 1. The correction coefficients have an upper limit preset to 1 and a lower limit preset to a specified value. The correction coefficients are adjusted within the range of these upper and lower limits.

The amplitude values of the phase voltage commands $V_r^*$, $V_s^*$, and $V_t^*$ determined by the three-phase voltage command determination unit 24 are corrected by adjusting the correction coefficients $\alpha_r$, $\alpha_s$, and $\alpha_t$ in accordance with the size relation between the current values of the respective phases.

Hereinafter, the processing executed by the unbalance correction processing unit 26 is described with reference to Fig. 18. For example, the unbalance correction processing unit 26 repeatedly executes the following processing in a specified period.

First, the unbalance correction processing unit 26 acquires R-phase and T-phase current detection values Ir and It measured by the current sensors 16a and 16b (step SA1), and calculates an estimated current value Is of the S-phase through an arithmetic calculation using the current detection values Ir and It of these two phases (step SA2). Next, among the current values of three phases, a maximum current value and a minimum current value are identified, and a difference between the maximum current value and the minimum current value is calculated (step SA3). Then, it is determined whether or not the difference is equal to or more than a preset specified threshold value (step SA4). If the difference is less than the threshold value, it is determined that the power supply 2 is not in the voltage unbalanced state, and this processing is ended ("NO" in step SA4).

On the contrary, if the difference is equal to or more than the threshold value ("YES" in step SA4), then it is determined whether or not the correction coefficient $\alpha$a corresponding to the maximum current phase (the phase that indicates the maximum current value) is 1, i.e., whether or not the correction coefficient $\alpha$ is set to the maximum value (step SA5). For example, when the maximum current phase is the S-phase, it is determined whether or not the correction coefficient $\alpha_s$ corresponding to the S-phase is 1.

If the correction coefficient $\alpha$ corresponding to the maximum current phase is not 1 ("NO" in step SA5) as a result of determination, then the correction coefficient $\alpha$ corresponding to the maximum current phase is increased by a specified amount (step SA6), and this processing is ended. If the correction coefficient corresponding to the maximum current phase is 1 (upper limit) ("YES" in step SA5), the correction coefficient corresponding to the minimum current phase is decreased by a specified amount (step SA7), and this processing is ended.

When the processing from steps SA1 to SA6 as stated above is repeatedly executed by the unbalance correction processing unit 26, difference between the current values of three phases, if generated due to the voltage unbalanced state, can be suppressed.

For example, the following voltage control is performed by repeated execution of the above processing.

Assume the case where the voltage of the three-phase AC power supply 2 is changed from a balanced state to an unbalanced state, and a size relation expressed by Ir>Is>It is produced between the current values of the respective phases on condition that the correction coefficients $\alpha$ of the respective phases are all set to an initial value of 1 for example. In this case, first, a T-phase coefficient $\alpha_t$ is gradually decreased (gradually decreased in the unit of 0.01). As the coefficient $\alpha_t$ decreases, the T-phase step-up voltage gradually increases. If the T-phase step-up voltage coincides the R-phase and S-phase step-up voltages when $\alpha_t$ is equal to 0.904 for example, the voltage command value $V_t^{*}$' corrected with $\alpha_t$=0.904 is continuously output for the T-phase thereafter.

Under this condition, if the voltage unbalanced state is returned to the voltage balanced state, the T-phase power supply voltage increases. However, since the T-phase voltage is stepped up based on the voltage command value $V_t^{*}$' corrected with the correction coefficient $\alpha_t$=0.904, the T-phase current becomes larger than other S-phase and R-phase currents this time. Once this turn of events occurs, it is determined whether or not the correction coefficient $\alpha_t$ of the T-phase, which is the maximum current phase, is 1. Since $\alpha_t$ is not equal to 1 as a result, the correction coefficient $\alpha_t$ is gradually increased from $\alpha_t$=0.904, and the T-phase step-up voltage gradually decreases. Accordingly, the T-phase current decreases, and when the T-phase current reaches substantially the same value as the S-phase and R-phase currents or when $\alpha_t$ becomes equal to 1, adjustment of the correction coefficient $\alpha_t$ is ended.

As described in the foregoing, according to the converter control device 4', method and program according to the present embodiment, when the voltage unbalanced state occurs, the correction coefficients $\alpha_r$, $\alpha_s$, and $\alpha_t$ of the respective phases are gradually increased or decreased in accordance with the size relation of the phase currents so as to control the step-up voltages of the respective phases. As a result, it becomes possible to make the current values of the respective phases substantially coincide.

Fig. 19 illustrates current waveforms of the respective phases when voltage unbalance occurs. Fig. 20 illustrates current waveforms of the respective phases after unbalance correction processing is performed in the voltage unbalanced state illustrated in Fig. 19. As illustrated in Fig. 20, even in the case of the voltage unbalanced state, executing the unbalance correction as described in the foregoing can make the currents of the respective phases substantially coincide.

When the voltages are determined to be in the voltage unbalanced state in the converter control device 4' according to the above-disclosed second embodiment, the unbalance correction processing unit 26 may determine whether or not an average of the currents of the respective phases is equal to or more than a preset specified value. If the average is equal to or more than the specified value, the above-described correction of the phase voltage commands may be performed. When the phase voltage commands are corrected in this way in a load region where the average of the respective phase currents is equal to or more than a specified value, it becomes possible to perform stable voltage step-up control.

{Third Embodiment}

Now, a converter control device 4a according to a third embodiment of the present invention is described with reference to Fig. 21. As illustrated in Fig. 21, a converter control device 4a according to the present embodiment is configured by further providing the converter control device 4' according to the above-disclosed second embodiment with a power failure notification unit 27.

When peak values of the corrected voltage command values $V_r^{*'}$, $V_s^{*'}$, and $V_t^{*'}$ output from the unbalance correction processing unit 26 become equal to or below a preset specified error notification threshold value, and this state is maintained for a prescribed period, the power failure notification unit 27 determines occurrence of power failure, and performs error notification.

The error notification is performed by displaying an error on a display unit not illustrated, or by emitting a sound. In addition to the error notification, shutdown of the converter 3 may be performed, and shutdown of the motor driver 1 may further be performed.

Providing such a power failure notification unit 27 enables the motor driver 1 to estimate the voltage unbalanced state which is not assumed on the power supply system side.

According to such a converter control device 4a, an air conditioner 1' as illustrated in Fig. 22 may also be embodied, for example. The air conditioner 1' has an indoor unit (for example, a control device, a fan motor, and the like of an indoor unit in particular) 7 connected to a power line of any one phase (for example, R-phase) out of power lines of three phases connected to the three-phase AC power supply 2, and an outdoor unit (for example, a control device, a fan motor, and the like of an outdoor unit in particular) 8 connected to a power line of one phase (for example, S-phase), out of the power lines of three phases connected to the three-phase AC power supply 2, other than the phase connected to the indoor unit 7.

When the peak values of the corrected voltage command values $V_r^{*'}$, $V_s^{*'}$, and $V_t^{*'}$ output from the unbalance correction processing unit 26 become equal to or below the preset specified error notification threshold value, and this state is maintained for a prescribed period, the power failure notification unit 27 of the converter control device 4a determines occurrence of power failure and performs the above-stated error notification. In addition, the power failure notification unit 27 identifies a phase corresponding to the voltage command value that satisfies the above conditions, and notifies the error to the connected indoor unit 7 or the outdoor unit 8 connected to the aforementioned phase.

As a result, it also becomes possible to notify the voltage unbalanced state and the like to the indoor unit 7 and the outdoor unit 8 which receive power from the three-phase AC power supply 2. In this case, it is desirable to set an error notification threshold value based on voltage design values allowable in the indoor unit 7 and the outdoor unit 8. For example, when the voltage value of the supply voltage becomes below the voltage value allowable in the indoor unit 7 and/or the outdoor unit 8, the error notification may be performed. Detecting the voltage unbalanced state and performing error notification in this way enable the indoor unit 7 and the outdoor unit 8 to ascertain that the error is occurring due to the voltage unbalance or due to other causes.

The power failure notification unit 27 may store a protecting level threshold value set smaller than the error notification threshold value. When the peak values of the corrected voltage command values $V_r^{*'}$, $V_s^{*'}$, and $V_t^{*'}$ output from the unbalance correction processing unit 26 become equal to or below the protecting level threshold value, and this state is maintained for a prescribed period, the power failure notification unit 27 may output a shutdown signal to the indoor unit 7 or the outdoor unit 8 connected to the corresponding phase. Thus, outputting a shutdown signal enables the indoor unit 7 and the outdoor unit 8 to be protected.

{Reference Signs List}

| | |
|---|---|
| 1 | Motor driver |
| 1' | Air conditioner |
| 2 | Three-phase AC power supply |
| 3 | Converter |
| 4, 4', 4a | Converter control device |
| 5 | Inverter |
| 6 | Inverter control device |
| 7 | Indoor unit |
| 8 | Outdoor unit |
| 10 | Bridge circuit |
| 11a, 11b, 11c | Switch unit |
| 12a, 12b, 12c | Upper arm switching element |
| 13a, 13b, 13c | Lower arm switching element |
| 14 | Reactor |
| 15 | Smoothing capacitor |
| 16a, 16b | Current sensor |

| 17 | Zero cross detection unit |
|---|---|
| 20 | Compressor motor |
| 21 | Reactive current calculation unit |
| 22 | Correction amount calculation unit |
| 23 | Phase correction unit |
| 24 | Three-phase voltage command determination unit |
| 25 | PWM signal generation unit |
| 26 | Unbalance correction processing unit |
| 27 | Power failure notification unit |
| 30 | Step-down circuit |
| 31 | Auxiliary machine |

**Claims**

1. A converter control device (4;4';4a) used for a converter (3), the converter including a bridge circuit (10) for converting three-phase AC voltage output from a three-phase AC power supply (2) into DC voltage and outputting the DC voltage, the bridge circuit (10) having a pair of switch units (11a, 11b, 11c) provided for each phase of the three-phase AC power supply, the pair of switch units including an upper arm switching element (12a,12b,12c) and a lower arm switching element (13a,13b,13c), the upper arm switching element and the lower arm switching element having a junction point connected to each corresponding phase, the converter control device (4;4';4a) being **characterized in that** it comprises:

   a reactive current calculation means (21) configured to calculate a reactive current by using current detection values of any two phases and a voltage phase of any one phase;
   a correction amount calculation means (22) configured to calculate a phase difference between the voltage phase of the phase and a voltage phase of the phase for zeroing the reactive current;
   a phase correction means (23) configured to correct the voltage phase of the phase by using the phase difference calculated by the correction amount calculation means (22);
   a three-phase voltage command determination means (24) configured to determine phase voltage commands corresponding to the respective phases based on a predetermined voltage command value and a corrected voltage phase of the phase; and
   a driving signal generation means (25) configured to generate driving signals for the switch units (11a, 11b, 11c) corresponding to the respective phases by using the phase voltage commands.

2. The converter control device according to claim 1, wherein the voltage phase of the phase used in the reactive current calculation means is detected by a zero cross detection means (17).

3. The converter control device according to claim 1, wherein the voltage phase of the phase used in the reactive current calculation means (21) is a previous value of the corrected voltage phase of the phase calculated by the phase correction means (23).

4. The converter control device according to claim 1, wherein the voltage phase of the phase used in the reactive current calculation means (21) is calculated through an arithmetic calculation using a phase formula including power supply frequency (f) and time (T) as a parameter.

5. The converter control device according to any one of claims 1 to 4, further comprising a zero cross detection means (17) connected to the one phase and to a neutral point of the three-phase AC power supply (2), the zero cross detection means detecting the voltage phase of the phase.

6. The converter control device according to claim 5, wherein when the three-phase AC power supply does not have a neutral point, a pseudo neutral point (N') formed by connecting the respective phases via resistances is used in place of the neutral point of the three-phase AC power supply (2).

7. The converter control device according to any one of claims 1 to 6, wherein
   in the case where a specified time delay (Td) is provided for on-and-off timing of switching the upper arm switching element (12a) and the lower arm switching element (13a) in an identical phase to prevent the switching elements (12a,13a) from being simultaneously turned on, the driving signal generation means generates PWM signals in which the off-timing of the lower arm switching element (13a) corresponding to the phase is delayed by a specified correction time (Tc) from the time when the phase voltage command corresponding to the phase and the triangular wave intersect if current of the phase is positive and the off-timing of the upper arm switching element (12a) corresponding to the phase is delayed by the specified correction time (Tc) from the time when the phase voltage command corresponding to the phase and the triangular wave intersect if the current of the phase is negative.

8. The converter control device according to any one of claims 1 to 7, further comprising
an unbalance correction processing means (26) configured to determine that the three-phase AC power supply (2) is in a voltage unbalanced state when a difference between the current values of any two phases out of current values of the respective phases reaches a preset specified threshold value or more, to correct amplitude values of the phase voltage commands determined by the three-phase voltage command determination means (24) with use of a size relation of the current values of the respective phases, and to output the corrected phase voltage commands to the driving signal generation means (25).

9. The converter control device according to claim 8, wherein
when the three-phase AC power supply (2) is determined to be in the voltage unbalanced state, the unbalance correction processing means (26) is configured to gradually increase an amplitude value of the phase voltage command corresponding to a phase that indicates a maximum current value or to gradually decrease the amplitude value of the phase voltage command corresponding to a phase that indicates a minimum current value until the respective phase currents coincide.

10. The converter control device according to claim 8 or 9, wherein
the amplitude value of the phase voltage command is corrected by the unbalance correction processing means (26) when an average of the respective phase currents is a preset specified value or more.

11. A load driver (1), comprising:

a converter (3) including a bridge circuit (10) for converting three-phase AC voltage output from a three-phase AC power supply into DC voltage and outputting the DC voltage, the bridge circuit (10) having a pair of switch units (11a, 11b, 11c) provided for each phase of the three-phase AC power supply, the pair of switch units including an upper arm switching element (12a,12b,12c) and a lower arm switching element, the upper arm switching element and the lower arm switching element (13a,13b,13c) having a junction point connected to each corresponding phase;
a converter control device (4;4';4a) according to any one of claims 1 to 10;
an inverter (5) configured to convert the DC voltage output from the converter (3) into three-phase AC voltage and supplies the three-phase AC voltage to a load; and
an inverter control means (6) configured to control the inverter.

12. An air conditioner (1') comprising a load driver (1) according to claim 11.

13. The air conditioner according to claim 12, further comprising
a step-down means (30) configured to branch DC power input from the converter (3) to the inverter (5) to step down voltage of the DC power, wherein
output power of the step-down means (30) is supplied to an air conditioning auxiliary machine (31).

14. An air conditioner (1'), comprising:

a converter (3) including a bridge circuit (10) for converting three-phase AC voltage output from a three-phase AC power supply (2) into DC voltage and outputting the DC voltage, the bridge circuit (10) having a pair of switch units (11a, 11b, 11c) provided for each phase of the three-phase AC power supply (2), the pair of switch units including an upper arm switching element (12a,12b,12c) and a lower arm switching element (13a,13b, 13c), the upper arm switching element and the lower arm switching element having a junction point connected to each corresponding phase;
a converter control device (4;4';4a) according to any one of claims 8 to 10;
an inverter (5) configured to convert the DC voltage output from the converter (3) into three-phase AC voltage and to supply the three-phase AC voltage to a compressor motor (20) ;
an inverter control means (6) configured to control the inverter;
an indoor unit (7) connected to a power line of any one phase out of power lines of three phases connected to the three-phase AC power supply (2);

an outdoor unit (8) connected to a power line of one phase, out of the power lines of three phases connected to the three-phase AC power supply, other than the phase connected to the indoor unit (7), wherein

the converter control means (4;4';4a) includes a power failure notification means (27) configured to perform error notification notifying power failure when the corrected phase voltage commands output from the unbalance correction processing means include a phase voltage command whose peak value is equal to or less than a preset specified error notification threshold value, the power failure being notified to the indoor unit (7) or the outdoor unit (8) connected to the corresponding phase.

15. The air conditioner according to claim 14, wherein

when the corrected phase voltage commands output from the unbalance correction processing means (26) include a phase voltage command whose peak value is equal to or less than a protection level threshold value set smaller than the error notification threshold value, the power failure notification means is configured to output a signal instructing shutdown to the indoor unit (7) or the outdoor unit (8) connected to a corresponding phase.

16. A method for converter control used for a converter (3), the converter (3) including a bridge circuit (10) for converting three-phase AC voltage output from a three-phase AC power supply (2) into DC voltage and outputting the DC voltage, the bridge circuit (10) having a pair of switch units (11a, 11b, 11c) provided for each phase of the three-phase AC power supply, the pair of switch units including an upper arm switching element (12a,12b,12c) and a lower arm switching element (13a,13b,13c), the upper arm switching element and the lower arm switching element having a junction point connected to each corresponding phase, the method comprising:

a reactive current calculating step of calculating a reactive current by using current detection values of any two phases and a voltage phase of any one phase;

a correction amount calculation step of calculating a phase difference between the voltage phase of the phase and a voltage phase of the phase for zeroing the reactive current;

a phase correction step of correcting the voltage phase of the phase by using the phase difference;

a three-phase voltage command determination step of determining phase voltage commands corresponding to the respective phases based on a predetermined voltage command value and a corrected voltage phase of the phase; and

a driving signal generation step of generating driving signals for the switch units (11a, 11b, 11c) corresponding to the respective phases by using the phase voltage commands.

17. A converter control program used for a converter (3), the converter (3) including a bridge circuit (10) for converting three-phase AC voltage output from a three-phase AC power supply (2) into DC voltage and outputting the DC voltage, the bridge circuit (10) having a pair of switch units (11a, 11b, 11c) provided for each phase of the three-phase AC power supply, the pair of switch units including an upper arm switching element (12a,12b,12c) and a lower arm switching element (13a,13b,13c), the upper arm switching element and the lower arm switching element having a junction point connected to each corresponding phase, the converter control program causing the converter control device of claim 1 to execute:

a reactive current calculation process of calculating a reactive current by using current detection values of any two phases and a voltage phase of any one phase;

a correction amount calculation process of calculating a phase difference between the voltage phase of the phase and a voltage phase of the phase for zeroing the reactive current;

a phase correction process of correcting the voltage phase of the phase by using the phase difference;

a three-phase voltage command determination process of determining phase voltage commands corresponding to the respective phases based on a predetermined voltage command value and a corrected voltage phase of the phase; and

a driving signal generation process of generating driving signals for the switch units (11a, 11b, 11c) corresponding to the respective phases by using the phase voltage commands.

**Patentansprüche**

1. Konvertersteuerungsvorrichtung (4; 4'; 4a), die für einen Konverter (3) verwendet wird, wobei der Konverter eine Brückenschaltung (10) enthält, um eine dreiphasige Ausgangswechselspannung von einer dreiphasigen Wechselstromversorgung (2) in Gleichspannung umzuwandeln und die Gleichspannung auszugeben, wobei die Brückenschaltung (10) ein Paar Schalteinheiten (11a, 11b, 11c) aufweist, die für jede Phase der dreiphasigen Wechselstromversorgung vorgesehen sind, wobei das Paar Schalteinheiten ein oberes Armschaltelement (12a, 12b, 12c) und ein unteres Armschaltelement (13a, 13b, 13c) enthält, wobei das obere Armschaltelement und das untere Armschaltelement einen Kreuzungspunkt aufweisen, der mit jeder entsprechenden Phase verbunden ist, wobei die Konvertersteuerungsvorrichtung (4; 4'; 4a) **dadurch gekennzeichnet ist, dass** sie umfasst:

ein Blindstromberechnungsmittel (21), das dafür konfiguriert ist, einen Blindstrom anhand von Stromdetektionswerten von jeweils zwei Phasen und einer Spannungsphase von jeder Phase zu berechnen,
ein Korrekturbetragberechnungsmittel (22), das dafür konfiguriert ist, eine Phasendifferenz zwischen der Spannungsphase der Phase und einer Spannungsphase der Phase zum Nullieren des Blindstroms zu berechnen,
ein Phasenkorrekturmittel (23), das dafür konfiguriert ist, die Spannungsphase der Phase unter Verwendung der durch das Korrekturbetragberechnungsmittel (22) berechneten Phasendifferenz zu korrigieren,
ein Dreiphasenspannungsbefehlsbestimmungsmittel (24), das dafür konfiguriert ist, Phasenspannungsbefehle, die den jeweiligen Phasen entsprechen, auf der Basis eines zuvor festgelegten Spannungsbefehlswertes und einer korrigierten Spannungsphase der Phase zu bestimmen, und
ein Ansteuersignalgenerierungsmittel (25), das dafür konfiguriert ist, Ansteuersignale für die Schalteinheiten (11a, 11b, 11c), die den jeweiligen Phasen entsprechen, unter Verwendung der Phasenspannungsbefehle zu generieren.

2. Konvertersteuerungsvorrichtung nach Anspruch 1, wobei die Spannungsphase der Phase, die in dem Blindstromberechnungsmittel verwendet wird, durch ein Nulldurchgang-Detektionsmittel (17) detektiert wird.

3. Konvertersteuerungsvorrichtung nach Anspruch 1, wobei die Spannungsphase der Phase, die in dem Blindstromberechnungsmittel (21) verwendet wird, ein früherer Wert der korrigierten Spannungsphase der Phase ist, die durch das Phasenkorrekturmittel (23) berechnet wurde.

4. Konvertersteuerungsvorrichtung nach Anspruch 1, wobei die Spannungsphase der Phase, die in dem Blindstromberechnungsmittel (21) verwendet wird, durch eine arithmetische Berechnung unter Verwendung einer Phaseformel berechnet wird, die eine Stromversorgungsfrequenz (f) und eine Zeit (T) als einen Parameter enthält.

5. Konvertersteuerungsvorrichtung nach einem der Ansprüche 1 bis 4, die ferner ein Nulldurchgang-Detektionsmittel (17) umfasst, das mit der einen Phase und mit einem Neutralpunkt der dreiphasigen Wechselstromversorgung (2) verbunden ist, wobei das Nulldurchgang-Detektionsmittel die Spannungsphase der Phase detektiert.

6. Konvertersteuerungsvorrichtung nach Anspruch 5, wobei, wenn die dreiphasige Wechselstromversorgung keinen Neutralpunkt hat, ein Pseudo-Neutralpunkt (N'), der durch Verbinden der jeweiligen Phasen über Widerstände gebildet wird, anstelle des Neutralpunktes der dreiphasigen Wechselstromversorgung (2) verwendet wird.

7. Konvertersteuerungsvorrichtung nach einem der Ansprüche 1 bis 6, wobei
in dem Fall, wo eine spezifizierte Zeitverzögerung (Td) zur Ein-und-Aus-Zeitsteuerung des Schaltens des oberen Armschaltelements (12a) und des unteren Armschaltelements (13a) in einer identischen Phase, um zu verhindern, dass die Schaltelemente (12a, 13a) gleichzeitig eingeschaltet werden, vorgesehen wird, das Ansteuersignalgenerierungsmittel Impulsbreitenmodulationssignale erzeugt, wobei die Aus-Zeitsteuerung des unteren Armschaltelements (13a), die der Phase entspricht, um eine spezifizierte Korrekturzeit (Tc) im Vergleich zu der Zeit verzögert wird, wo der Phasenspannungsbefehl, der der Phase entspricht, und die Dreieckswelle sich überschneiden, falls der Strom der Phase positiv ist und die Aus-Zeitsteuerung des oberen Armschaltelements (12a), die der Phase entspricht, um die spezifizierte Korrekturzeit (Tc) im Vergleich zu der Zeit verzögert wird, wo der Phasenspannungsbefehl, der der Phase entspricht, und die Dreieckswelle sich überschneiden, falls der Strom der Phase negativ ist.

8. Konvertersteuerungsvorrichtung nach einem der Ansprüche 1 bis 7, ferner umfassend:

ein Asymmetriekorrekturverarbeitungsmittel (26), das dafür konfiguriert ist zu bestimmen, dass die dreiphasige Wechselstromversorgung (2) in einem spannungsasymmetrischen Zustand ist, wenn eine Differenz zwischen den Stromwerten von jeweils zwei Phasen aus Stromwerten der jeweiligen Phasen einen voreingestellten spezifizierten Schwellenwert oder mehr erreicht, um Amplitudenwerte der Phasenspannungsbefehle, die durch das Dreiphasenspannungsbefehlsbestimmungsmittel (24) bestimmt wurden, unter Verwendung einer Größenbeziehung der Stromwerte der jeweiligen Phasen zu korrigieren, und die korrigierten Phasenspannungsbefehle an das Ansteuersignalgenerierungsmittel (25) auszugeben.

9. Konvertersteuerungsvorrichtung nach Anspruch 8, wobei,
wenn bestimmt wird, dass sich die dreiphasige Wechselstromversorgung (2) im spannungsasymmetrischen Zustand befindet, das Asymmetriekorrekturverarbeitungsmittel (26) dafür konfiguriert ist, einen Amplitudenwert des Phasenspannungsbefehls, der einer Phase entspricht, die einen maximalen Stromwert anzeigt, allmählich anzuheben oder den Amplitudenwert des Phasenspannungsbefehls, der einer Phase entspricht, die einen Mindeststromwert anzeigt, allmählich zu verringern, bis die jeweiligen Phasenströme übereinstimmen.

10. Konvertersteuerungsvorrichtung nach Anspruch 8 oder 9, wobei
der Amplitudenwert des Phasenspannungsbefehls durch das Asymmetriekorrekturverarbeitungsmittel (26) korrigiert wird, wenn ein Durchschnitt der jeweiligen Phasenströme ein voreingestellter spezifizierter Wert oder mehr ist.

11. Lastansteuerungsvorrichtung (1), umfassend:

einen Konverter (3), der eine Brückenschaltung (10) enthält, um eine dreiphasige Ausgangswechselspannung von einer dreiphasigen Wechselstromversorgung in Gleichspannung umzuwandeln und die Gleichspannung auszugeben, wobei die Brückenschaltung (10) ein Paar Schalteinheiten (11a, 11b, 11c) aufweist, die für jede Phase der dreiphasigen Wechselstromversorgung vorgesehen sind, wobei das Paar Schalteinheiten ein oberes Armschaltelement (12a, 12b, 12c) und ein unteres Armschaltelement enthält, wobei das obere Armschaltelement und das untere Armschaltelement (13a, 13b, 13c) einen Kreuzungspunkt aufweisen, der mit jeder entsprechenden Phase verbunden ist,
eine Konvertersteuerungsvorrichtung (4; 4'; 4a) nach einem der Ansprüche 1 bis 10,
einen Inverter (5), der dafür konfiguriert ist, die Ausgangsgleichspannung von dem Konverter (3) in dreiphasige Wechselspannung umzuwandeln, und die dreiphasige Wechselspannung in eine Last einspeist, und
ein Invertersteuerungsmittel (6), das dafür konfiguriert ist, den Inverter zu steuern.

12. Klimaanlage (1'), die eine Lastansteuerungsvorrichtung (1) nach Anspruch 11 umfasst.

13. Klimaanlage nach Anspruch 12, ferner umfassend:

ein Abspannmittel (30), das dafür konfiguriert ist, aus dem Konverter (3) eingespeisten Gleichstrom zu dem Inverter (5) abzuzweigen, um eine Spannung des Gleichstroms abzuspannen, wobei eine Ausgangsleistung des Abspannmittels (30) in eine Klimaanlagen-Hilfsmaschine (31) einzuspeisen.

14. Klimaanlage (1'), umfassend:

einen Konverter (3), der eine Brückenschaltung (10) enthält, um eine dreiphasige Ausgangswechselspannung von einer dreiphasigen Wechselstromversorgung (2) in Gleichspannung umzuwandeln und die Gleichspannung auszugeben, wobei die Brückenschaltung (10) ein Paar Schalteinheiten (11a, 11b, 11c) aufweist, die für jede Phase der dreiphasigen Wechselstromversorgung (2) vorgesehen sind, wobei das Paar Schalteinheiten ein oberes Armschaltelement (12a, 12b, 12c) und ein unteres Armschaltelement (13a, 13b, 13c) enthält, wobei das obere Armschaltelement und das untere Armschaltelement einen Kreuzungspunkt aufweisen, der mit jeder entsprechenden Phase verbunden ist,
eine Konvertersteuerungsvorrichtung (4; 4'; 4a) nach einem der Ansprüche 8 bis 10,
einen Inverter (5), der dafür konfiguriert ist, die Ausgangsgleichspannung von dem Konverter (3) in dreiphasige Wechselspannung umzuwandeln und die dreiphasige Wechselspannung in einen Kompressormotor (20) einzuspeisen,
ein Invertersteuerungsmittel (6), das dafür konfiguriert ist, den Inverter zu steuern,
eine Inneneinheit (7), die mit einer Stromleitung einer Phase von Stromleitungen von drei Phasen, die mit der dreiphasigen Wechselstromversorgung (2) verbunden sind, verbunden ist,
eine Außeneinheit (8), die mit einer Stromleitung einer einzelnen Phase aus den Stromleitungen von drei Phasen, die mit der dreiphasigen Wechselstromversorgung verbunden sind, verbunden ist, die nicht die Phase ist, die mit der Inneneinheit (7) verbunden ist,
wobei das Konvertersteuerungsmittel (4; 4'; 4a) ein Stromausfallbenachrichtigungsmittel (27) enthält, das dafür konfiguriert ist, eine Fehlerbenachrichtigung auszuführen, die einen Stromausfall bekannt gibt, wenn die von dem Asymmetriekorrekturverarbeitungsmittel ausgegebenen korrigierten Phasenspannungsbefehle einen Phasenspannungsbefehl enthalten, dessen Spitzenwert nicht größer ist als ein voreingestellter spezifizierter Fehlerbenachrichtigungsschwellenwert, wobei der Stromausfall an die Inneneinheit (7) oder die Außeneinheit (8), die mit der entsprechenden Phase verbunden ist, gemeldet wird.

**15.** Klimaanlage nach Anspruch 14, wobei, wenn die von dem Asymmetriekorrekturverarbeitungsmittel (26) ausgegebenen korrigierten Phasenspannungsbefehle einen Phasenspannungsbefehl enthalten, dessen Spitzenwert nicht größer ist als ein Schutzpegelschwellenwert, der auf kleiner eingestellt ist als der Fehlerbenachrichtigungsschwellenwert, das Stromausfallbenachrichtigungsmittel dafür konfiguriert ist, ein Signal, das eine Abschaltung anweist, an die Inneneinheit (7) oder die Außeneinheit (8), die mit einer entsprechende Phase verbunden ist, auszugeben.

**16.** Verfahren zur Konvertersteuerung, die für einen Konverter (3) verwendet wird, wobei der Konverter (3) eine Brückenschaltung (10) enthält, um eine dreiphasige Ausgangswechselspannung von einer dreiphasigen Wechselstromversorgung (2) in Gleichspannung umzuwandeln und die Gleichspannung auszugeben, wobei die Brückenschaltung (10) ein Paar Schalteinheiten (11a, 11b, 11c) aufweist, die für jede Phase der dreiphasigen Wechselstromversorgung vorgesehen sind, wobei das Paar Schalteinheiten ein oberes Armschaltelement (12a, 12b, 12c) und ein unteres Armschaltelement (13a, 13b, 13c) enthält, wobei das obere Armschaltelement und das untere Armschaltelement einen Kreuzungspunkt aufweisen, der mit jeder entsprechenden Phase verbunden ist, wobei das Verfahren umfasst:

einen Blindstromberechnungsschritt zum Berechnen eines Blindstroms unter Verwendung von Stromdetektionswerten von jeweils zwei Phasen und einer Spannungsphase einer Phase,
einen Korrekturbetragberechnungsschritt zum Berechnen einer Phasendifferenz zwischen der Spannungsphase der Phase und einer Spannungsphase der Phase zum Nullieren des Blindstroms,
einen Phasenkorrekturschritt zum Korrigieren der Spannungsphase der Phase unter Verwendung der Phasendifferenz,
einen Dreiphasenspannungsbefehlsbestimmungsschritt zum Bestimmen von Phasenspannungsbefehlen, die den jeweiligen Phasen entsprechen, auf der Basis eines zuvor festgelegten Spannungsbefehlswertes und einer korrigierten Spannungsphase der Phase, und
einen Ansteuersignalgenerierungsschritt zum Generieren von Ansteuersignalen für die Schalteinheiten (11a, 11b, 11c), die den jeweiligen Phasen entsprechen, unter Verwendung der Phasenspannungsbefehle.

**17.** Konvertersteuerungsprogramm, das für einen Konverter (3) verwendet wird, wobei der Konverter (3) eine Brückenschaltung (10) enthält, um eine dreiphasige Ausgangswechselspannung von einer dreiphasigen Wechselstromversorgung (2) in Gleichspannung umzuwandeln und die Gleichspannung auszugeben, wobei die Brückenschaltung (10) ein Paar Schalteinheiten (11a, 11b, 11c) aufweist, die für jede Phase der dreiphasigen Wechselstromversorgung vorgesehen sind, wobei das Paar Schalteinheiten ein oberes Armschaltelement (12a, 12b, 12c) und ein unteres Armschaltelement (13a, 13b, 13c) enthält, wobei das obere Armschaltelement und das untere Armschaltelement einen Kreuzungspunkt aufweisen, der mit jeder entsprechenden Phase verbunden ist, wobei das Konvertersteuerungsprogramm die Konvertersteuerungsvorrichtung von Anspruch 1 veranlasst, auszuführen:

einen Blindstromsberechnungsprozess zum Berechnen eines Blindstroms unter Verwendung von Stromdetektionswerten von jeweils zwei Phasen und einer Spannungsphase einer Phase,
einen Korrekturbetragberechnungsprozess zum Berechnen einer Phasendifferenz zwischen der Spannungsphase der Phase und einer Spannungsphase der Phase zum Nullieren des Blindstroms,
einen Phasenkorrekturprozess zum Korrigieren der Spannungsphase der Phase unter Verwendung der Phasendifferenz,
einen Dreiphasenspannungsbefehlsbestimmungsprozess zum Bestimmen von Phasenspannungsbefehlen, die den jeweiligen Phasen entsprechen, auf der Basis eines zuvor festgelegten Spannungsbefehlswertes und einer korrigierten Spannungsphase der Phase, und
einen Ansteuersignalgenerierungsprozess zum Generieren von Ansteuersignalen für die Schalteinheiten (11a, 11b, 11c), die den jeweiligen Phasen entsprechen, unter Verwendung der Phasenspannungsbefehle.

**Revendications**

**1.** Dispositif de commande de convertisseur (4 ; 4' ; 4a) utilisé pour un convertisseur (3), le convertisseur comprenant un montage en pont (10) pour convertir une tension à courant alternatif triphasé délivrée par une alimentation à courant alternatif triphasé (2) en une tension à courant continu et délivrer la tension à courant continu, le montage en pont (10) ayant une paire d'unités de commutateur (11a, 11b, 11c) prévues pour chaque phase de l'alimentation à courant alternatif triphasé, la paire d'unités de commutateur comprenant un élément de commutation de branche supérieure (12a, 12b, 12c) et un élément de commutation de branche inférieure (13a, 13b, 13c), l'élément de commutation de branche supérieure et l'élément de commutation de branche inférieure ayant un point de jonction connecté à chaque phase correspondante, le dispositif de commande de convertisseur (4 ; 4' ; 4a) étant **caractérisé en ce qu'**il comporte :

des moyens de calcul de courant réactif (21) configurés pour calculer un courant réactif en utilisant des valeurs de détection de courant de deux phases quelconques et une phase de tension de n'importe quelle phase ;
des moyens de calcul de quantité de correction (22) configurés pour calculer une différence de phase entre la phase de tension de la phase et une phase de tension de la phase pour mettre à zéro le courant réactif ;
des moyens de correction de phase (23) configurés pour corriger la phase de tension de la phase en utilisant la différence de phase calculée par les moyens de calcul de quantité de correction (22) ;
des moyens de détermination de commande de tension triphasée (24) configurés pour déterminer des commandes de tension de phase correspondant aux phases respectives sur la base d'une valeur de commande de tension prédéterminée et d'une phase de tension corrigée de la phase ; et
des moyens de génération de signal de commande (25) configurés pour générer des signaux de commande pour les unités de commutateur (11a, 11b, 11c) correspondant aux phases respectives en utilisant les commandes de tension de phase.

2. Dispositif de commande de convertisseur selon la revendication 1, dans lequel la phase de tension de la phase utilisée dans les moyens de calcul de courant réactif est détectée par des moyens de détection de passage par zéro (17).

3. Dispositif de commande de convertisseur selon la revendication 1, dans lequel la phase de tension de la phase utilisée dans les moyens de calcul de courant réactif (21) est une valeur précédente de la phase de tension corrigée de la phase calculée par les moyens de correction de phase (23).

4. Dispositif de commande de convertisseur selon la revendication 1, dans lequel la phase de tension de la phase utilisée dans les moyens de calcul de courant réactif (21) est calculée par l'intermédiaire d'un calcul arithmétique utilisant une formule de phase comprenant la fréquence d'alimentation (f) et le temps (T) comme paramètre.

5. Dispositif de commande de convertisseur selon l'une quelconque des revendications 1 à 4, comportant en outre des moyens de détection de passage par zéro (17) connectés ladite phase et à un point neutre de l'alimentation à courant alternatif triphasé (2), les moyens de détection de passage par zéro détectant la phase de tension de la phase.

6. Dispositif de commande de convertisseur selon la revendication 5, dans lequel, quand l'alimentation à courant alternatif triphasé n'a pas de point neutre, un pseudo point neutre (N') formé en reliant les phases respectives par l'intermédiaire de résistances est utilisé à la place du point neutre de l'alimentation à courant alternatif triphasé (2).

7. Dispositif de commande de convertisseur selon l'une quelconque des revendications 1 à 6, dans lequel dans le cas où un retard de temps spécifié (Td) est prévu pour une temporisation marche-arrêt de commutation de l'élément de commutation de branche supérieure (12a) et de l'élément de commutation de branche inférieure (13a) dans une phase identique pour empêcher les éléments de commutation (12a, 13a) d'être simultanément mis en marche, les moyens de génération de signal de commande génèrent des signaux de modulation de largeur d'impulsions dans lesquels la temporisation d'arrêt de l'élément de commutation de branche inférieure (13a) correspondant à la phase est retardée d'un temps de correction spécifié (Tc) par rapport au temps où la commande de tension de phase correspondant à la phase et l'onde triangulaire se croisent si un courant de la phase est positif et la temporisation d'arrêt de l'élément de commutation de branche supérieure (12a) correspondant à la phase est retardée du temps de correction spécifié (Tc) par rapport au temps où la commande de tension de phase correspondant à la phase et l'onde triangulaire se croisent si le courant de la phase est négatif.

8. Dispositif de commande de convertisseur selon l'une quelconque des revendications 1 à 7, comportant en outre des moyens de traitement de correction de déséquilibre (26) configurés pour déterminer que l'alimentation à courant alternatif triphasé (2) est dans un état déséquilibré en tension quand une différence entre les valeurs de courant de deux phases quelconques parmi des valeurs de courant des phases respectives atteint une valeur de seuil spécifiée préétablie ou plus, pour corriger des valeurs d'amplitude des commandes de tension de phase déterminées par les moyens de détermination de commande de tension triphasée (24) avec l'utilisation d'une relation de taille des valeurs de courant des phases respectives, et pour délivrer les commandes de tension de phase corrigées aux moyens de génération de signal de commande (25).

9. Dispositif de commande de convertisseur selon la revendication 8, dans lequel

quand l'alimentation à courant alternatif triphasé (2) est déterminée comme étant dans l'état déséquilibré en tension, les moyens de traitement de correction de déséquilibre (26) sont configurés pour augmenter progressivement une valeur d'amplitude de la commande de tension de phase correspondant à une phase qui indique une valeur de courant maximum ou pour diminuer progressivement la valeur d'amplitude de la commande de tension de phase correspondant à une phase qui indique une valeur de courant minimum jusqu'à ce que les courants de phase respectifs coïncident.

10. Dispositif de commande de convertisseur selon la revendication 8 ou 9, dans lequel
la valeur d'amplitude de la commande de tension de phase est corrigée par les moyens de traitement de correction de déséquilibre (26) quand une moyenne des courants de phase respectifs est une valeur spécifiée préétablie ou plus.

11. Circuit de commande de charge (1), comportant :

un convertisseur (3) comprenant un montage en pont (10) pour convertir une tension à courant alternatif triphasé délivrée par une alimentation à courant alternatif triphasé en une tension à courant continu et délivrer la tension à courant continu, le montage en pont (10) ayant une paire d'unités de commutateur (11a, 11b, 11c) prévues pour chaque phase de l'alimentation à courant alternatif triphasé, la paire d'unités de commutateur comprenant un élément de commutation de branche supérieure (12a, 12b, 12c) et un élément de commutation de branche inférieure, l'élément de commutation de branche supérieure et l'élément de commutation de branche inférieure (13a, 13b, 13c) ayant un point de jonction connecté à chaque phase correspondante ;
un dispositif de commande de convertisseur (4 ; 4' ; 4a) selon l'une quelconque des revendications 1 à 10 ;
un onduleur (5) configuré pour convertir la tension à courant continu délivrée par le convertisseur (3) en une tension à courant alternatif triphasé et délivrer la tension à courant alternatif triphasé à une charge ; et
des moyens de commande d'onduleur (6) configurés pour commander l'onduleur.

12. Climatiseur (1') comportant un circuit de commande de charge (1) selon la revendication 11.

13. Climatiseur selon la revendication 12, comportant en outre
des moyens d'abaissement de tension (30) configurés pour relier l'entrée en courant continu depuis le convertisseur (3) vers l'onduleur (5) pour abaisser la tension du courant continu, dans lequel
la puissance de sortie des moyens d'abaissement de tension (30) est délivrée à une machine auxiliaire de climatisation (31).

14. Climatiseur (1'), comportant :

un convertisseur (3) comprenant un montage en pont (10) pour convertir une tension à courant alternatif triphasé délivrée par une alimentation à courant alternatif triphasé (2) en une tension à courant continu et délivrer la tension à courant continu, le montage en pont (10) ayant une paire d'unités de commutateur (11a, 11b, 11c) prévues pour chaque phase de l'alimentation à courant alternatif triphasé (2), la paire d'unités de commutateur comprenant un élément de commutation de branche supérieure (12a, 12b, 12c) et un élément de commutation de branche inférieure (13a, 13b, 13c), l'élément de commutation de branche supérieure et l'élément de commutation de branche inférieure ayant un point de jonction connecté à chaque phase correspondante ;
un dispositif de commande de convertisseur (4 ; 4' ; 4a) selon l'une quelconque des revendications 8 à 10 ;
un onduleur (5) configuré pour convertir la tension à courant continu délivrée par le convertisseur (3) en une tension à courant alternatif triphasé et pour délivrer la tension à courant alternatif triphasé à un moteur de compresseur (20) ;
des moyens de commande d'onduleur (6) configurés pour commander l'onduleur ;
une unité intérieure (7) reliée à une ligne électrique de n'importe quelle phase parmi des lignes électriques de trois phases reliées à l'alimentation à courant alternatif triphasé (2) ;
une unité extérieure (8) reliée à une ligne électrique d'une phase, parmi les lignes électriques de trois phases reliées à l'alimentation à courant alternatif triphasé, autre que la phase reliée à l'unité intérieure (7), dans lequel
les moyens de commande de convertisseur (4 ; 4' ; 4a) comprennent des moyens de notification de panne d'alimentation (27) configurés pour réaliser une notification d'erreur qui notifie une panne d'alimentation quand les commandes de tension de phase corrigée délivrées par les moyens de traitement de correction de déséquilibre comprennent une commande de tension de phase dont une valeur de crête est égale ou inférieure à une valeur de seuil de notification d'erreur spécifiée préétablie, la panne d'alimentation étant notifiée à l'unité intérieure (7) ou à l'unité extérieure (8) reliée à la phase correspondante.

**15.** Climatiseur selon la revendication 14, dans lequel
quand les commandes de tension de phase corrigées délivrées par les moyens de traitement de correction de déséquilibre (26) comprennent une commande de tension de phase dont une valeur de crête est égale ou inférieure à valeur de seuil de niveau de protection établie plus petite que la valeur de seuil de notification d'erreur, les moyens de notification de panne d'alimentation sont configurés pour délivrer un signal d'instruction d'arrêt à l'unité intérieure (7) ou à l'unité extérieure (8) reliée à une phase correspondante.

**16.** Procédé de commande de convertisseur utilisé pour un convertisseur (3), le convertisseur (3) comprenant un montage en pont (10) pour convertir une tension à courant alternatif triphasé délivrée par une alimentation à courant alternatif triphasé (2) en une tension à courant continu et délivrer la tension à courant continu, le montage en pont (10) ayant une paire d'unités de commutateur (11a, 11b, 11c) prévues pour chaque phase de l'alimentation à courant alternatif triphasé, la paire d'unités de commutateur comprenant un élément de commutation de branche supérieure (12a, 12b, 12c) et un élément de commutation de branche inférieure (13a, 13b, 13c), l'élément de commutation de branche supérieure et l'élément de commutation de branche inférieure ayant un point de jonction connecté à chaque phase correspondante, le procédé comportant :

une étape de calcul de courant réactif en utilisant des valeurs de détection de courant de deux phases quelconques et une phase de tension de n'importe quelle phase ;
une étape de calcul de quantité de correction pour calculer une différence de phase entre la phase de tension de la phase et une phase de tension de la phase pour mettre à zéro le courant réactif ;
une étape de correction de phase pour corriger la phase de tension de la phase en utilisant la différence de phase ;
une étape de détermination de commande de tension triphasée pour déterminer des commandes de tension de phase correspondant aux phases respectives sur la base d'une valeur de commande de tension prédéterminée et d'une phase de tension corrigée de la phase ; et
une étape de génération de signaux de commande pour les unités de commutateur (11a, 11b, 11c) correspondant aux phases respectives en utilisant les commandes de tension de phase.

**17.** Programme de commande de convertisseur utilisé pour un convertisseur (3), le convertisseur (3) comprenant un montage en pont (10) pour convertir une tension à courant alternatif triphasé délivrée par une alimentation à courant alternatif triphasé (2) en une tension à courant continu et délivrer la tension à courant continu, le montage en pont (10) ayant une paire d'unités de commutateur (11a, 11b, 11c) prévues pour chaque phase de l'alimentation à courant alternatif triphasé, la paire d'unités de commutateur comprenant un élément de commutation de branche supérieure (12a, 12b, 12c) et un élément de commutation de branche inférieure (13a, 13b, 13c), l'élément de commutation de branche supérieure et l'élément de commutation de branche inférieure ayant un point de jonction connecté à chaque phase correspondante, le programme de commande de convertisseur amenant le dispositif de commande de convertisseur selon la revendication 1 à exécuteur :

un processus de calcul de courant réactif pour calculer un courant réactif en utilisant des valeurs de détection de courant de deux phases quelconques et une phase de tension de n'importe quelle phase ;
un processus de calcul de quantité de correction pour calculer une différence de phase entre la phase de tension de la phase et une phase de tension de la phase pour mettre à zéro le courant réactif ;
un processus de correction de phase pour corriger la phase de tension de la phase en utilisant la différence de phase ;
un processus de détermination de commande de tension triphasée pour déterminer des commandes de tension de phase correspondant aux phases respectives sur la base d'une valeur de commande de tension prédéterminée et d'une phase de tension corrigée de la phase ; et
un processus de génération de signal de commande pour générer des signaux de commande pour les unités de commutateur (11a, 11b, 11c) correspondant aux phases respectives en utilisant les commandes de tension de phase.

# FIG. 1

EP 2 869 451 B1

# FIG. 2

R-PHASE          S-PHASE          T-PHASE

RESISTANCE   RESISTANCE   RESISTANCE

N'

# FIG. 3

FIG. 4

FIG. 5

# FIG. 6

Vdc

CONTROL PERFORMED

CONTROL NOT PERFORMED

0                    LOAD

# FIG. 7

Vdc

0    380    400    415

POWER SUPPLY VOLTAGE [V]

FIG. 8

TRIANGULAR WAVE

$v_r^*$

UPPER ARM
(R-PHASE)

LOWER ARM
(R-PHASE)

# FIG. 9

$V_r^*$

TRIANGULAR WAVE

UPPER ARM
(R-PHASE)

LOWER ARM
(R-PHASE)

EP 2 869 451 B1

# FIG. 10

# FIG. 11

CURRENT
(NEGATIVE)
(R-PHASE)

DETECTION OF CURRENT

UPPER ARM
(R-PHASE)

Td

LOWER ARM
(R-PHASE)

Td

Td

Pf−Td

Pa

RN
VOLTAGE

Pa

# FIG. 12

# FIG. 13

FIG. 14

# FIG. 15

16a, 16b            17            10

| CURRENT SENSOR | | ZERO CROSS DETECTOR | | BRIDGE CIRCUIT |

Ir, It        $\theta$

PWM SIGNAL

REACTIVE CURRENT CALCULATION UNIT ⟶ 21

PWM SIGNAL GENERATION UNIT

Iq

25

CORRECTION AMOUNT CALCULATION UNIT

$\phi$

PHASE CORRECTION UNIT ⟶ 23

0 ⟶

$Vr^{*'}$
$Vs^{*'}$
$Vt^{*'}$

22

THREE-PHASE VOLTAGE COMMAND DETERMINATION UNIT

UNBALANCE CORRECTION PROCESSING UNIT

k ⟶

$Vr^{*}$
$Vs^{*}$
$Vt^{*}$

24           26

4'

Ir, It

# FIG. 16

R-PHASE
CURRENT

S-PHASE
CURRENT

T-PHASE
CURRENT

TIME

# FIG. 17

R-PHASE
CURRENT

S-PHASE
CURRENT

T-PHASE
CURRENT

TIME

# FIG. 18

START

↓

ACQUIRE CURRENT VALUES
OF TWO PHASES — SA1

↓

ESTIMATE CURRENT VALUE OF
ANOTHER ONE PHASE — SA2

↓

CALCULATE DIFFERENCE BETWEEN
MAXIMUM CURRENT VALUE
AND MINIMUM CURRENT VALUE — SA3

↓

SA4

DIFFERENCE ≧
THRESHOLD VALUE
?

NO → 

YES ↓

SA5

COEFFICIENT
OF MAXIMUM CURRENT
PHASE =1?

NO →

YES ↓

DECREASE CORRECTION
COEFFICIENT OF MAXIMUM
CURRENT PHASE BY
SPECIFIED AMOUNT — SA7

INCREASE CORRECTION
COEFFICIENT OF MAXIMUM
CURRENT PHASE BY
SPECIFIED AMOUNT — SA6

↓

END

# FIG. 19

R-PHASE
CURRENT

S-PHASE
CURRENT

T-PHASE
CURRENT

TIME

# FIG. 20

R-PHASE
CURRENT

S-PHASE
CURRENT

T-PHASE
CURRENT

TIME

# FIG. 21

# FIG. 22

EP 2 869 451 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI10164845 B

**Non-patent literature cited in the description**

- **ZARGARI et al.** An on-line operated unity power factor PWM rectifier for AC drive applications. *Conference record of the industry applications conference,* 02 October 1994, vol. 1, ISBN 978-0-7803-1664-3, 673-678

- **MARSCHALKO et al.** Optimal control and appropriate pulse width modulation for a three-phase voltage DC-link PWM converter. *Proceedings of the industry applications society annual meeting,* 04 October 1992, ISBN 978-0-7803-0635-6, 1042-1049